# EUROPÄISCHE PATENTSCHRIFT

(11) **EP 3 185 982 B1**
(45) Veröffentlichungstag und Bekanntmachung des Hinweises auf die Patenterteilung: **17.06.2020**
(21) Anmeldenummer: 15771031.0
(22) Anmeldetag: 26.08.2015
(51) Int. Cl.: B01D 35/147, B01D 29/21, B01D 35/30

(54) **VORRICHTUNG ZUM REINIGEN VON FLÜSSIGEN ODER GASFÖRMIGEN MEDIEN UND ABSCHEIDEELEMENT FÜR DIE VORRICHTUNG**
DEVICE FOR CLEANING A LIQUID OR GAS MEDIUM AND SEPARATION DEVICE THEREFOR
DISPOSITIF DE PURIFICATION D'UN LIQUIDE OU UN GAS ET DISPOSITIF DE SEPARATION

(30) Priorität: 28.08.2014 DE 202014104029 U; 12.03.2015 DE 102015103619
(43) Veröffentlichungstag der Anmeldung: 05.07.2017
(73) Patentinhaber: Hengst SE, 48147 Münster (DE)
(72) Erfinder: ARDES, Wilhelm, 59387 Ascheberg (DE)
(74) Vertreter: Schulze Horn, Kathrin
(86) Internationale Anmeldenummer: PCT/EP2015/069559
(87) Internationale Veröffentlichungsnummer: WO 2016/030428

(56) Entgegenhaltungen:
- EP-A2- 2 027 906
- WO-A1-2009/149186
- WO-A1-2015/150443
- DE-A1-102013 003 304
- US-A1- 2007 267 338

## Beschreibung

Die Erfindung betrifft eine Vorrichtung zum Reinigen von flüssigen oder gasförmigen Medien, mit einem becher- oder topfförmigen Gehäuse, mit einem in der Vorrichtung angeordneten auswechselbaren Abscheideelement, welches in der Vorrichtung einen Rohmediumbereich und einen Reinmediumbereich voneinander trennt, mit einem in den Rohmediumbereich mündenden Mediumeinlass für zu reinigendes Medium, mit einem vom Reinmediumbereich abgehenden Mediumauslass für gereinigtes Medium, und mit einem mit dem Gehäuse mittels einer Verbindung lösbar verbundenen Gehäusedeckel, wobei in einem axialen Überlappungsbereich von Gehäuse und Gehäusedeckel das Gehäuse erste umlaufende Verbindungsmittel und der Gehäusedeckel dazu passende zweite umlaufende Verbindungsmittel aufweist, die durch Verdrehen relativ zueinander in Umfangsrichtung in und außer Eingriff bringbar sind, und wobei zwischen dem Gehäuse und dem Gehäusedeckel eine diese bei mit dem Gehäuse verbundenem Gehäusedeckel gegeneinander abdichtende Dichtung angeordnet ist.

Eine Vorrichtung der eingangs genannten Art in Form einer Filtereinrichtung ist aus dem Dokument DE 10 2013 003 304 A1 bekannt. Die Filtereinrichtung umfasst ein Filterelement und zwei Gehäuseteile. In die Stirnseite des Randes des einen, topfförmigen Gehäuseteils sind Ausnehmungen geringer axialer Erstreckung eingeformt. Die Ausnehmungen liegen axial entfernt von den Verbindungsmitteln der Gehäuseteile, hier einem Außengewinde am topfförmigen Gehäuseteil und einem Innengewinde am anderen, einem Filterkopf bildenden Gehäuseteil. Am Filterelement sind an dessen einer Endscheibe kurze Haken angeformt, die axial vom Filterelement weg verlaufen und die an ihrem freien Ende eine nach radial außen ragende Nase aufweisen. Zusätzlich braucht die Filtereinrichtung nach diesem Dokument zu ihrem Zusammenbau einen Adapterring mit Laschen, die in die Ausnehmungen am Stirnende des topfförmigen Gehäuseteils eingreifen, und mit Ausnehmungen, in welche die Haken eingreifen. Eine Dichtung zum Abdichten der miteinander verschraubten Gehäuseteile gegeneinander ist auf dem Außenumfang des topfförmigen Gehäuseteils benachbart zu dessen Außengewinde angeordnet.

Das Dokument US 2011/0 147 297 A1 zeigt einen Filter, umfassend einen Filtertopf, einen Filterkopf und ein Filterelement. Am Filterelement sind Vorsprünge angeformt, die Elemente einer Bajonettverbindung darstellen, mittels welcher der Filtertopf mit dem darin angeordneten Filterelement mit dem Filterkopf lösbar verbindbar ist. Im Rand des Filtertopfs sind Randausnehmungen vorgesehen, die eine geringe axiale Länge haben und in einem Abstand vor den Bajonett-Teilelementen des Filtertopfs enden. Entsprechend sind die Vorsprünge am Filterelement nur gering nach radial außen vorstehende Teilelemente der Bajonettverbindung, die sich mit den Bajonett-Teilelementen des Filtertopfs zu vollständigen Bajonettelementen ergänzen, die in lösbaren Verbindungseingriff mit den Bajonettelementen am Filterkopf bringbar sind. Nur wenn alle drei Elemente, d. h. Filtertopf, Filterelement und Filterkopf, vorhanden sind, kann die Bajonettverbindung hergestellt werden. Sollte das Filterelement fehlen, kann eine Verbindung allein zwischen dem Filtertopf und dem Filterkopf aufgrund des Fehlens der am Filterelement vorgesehenen Teile der Bajonettverbindung nicht hergestellt werden. Damit wird ein Betrieb des Filters ohne Filterelement verhindert. Zur Abdichtung von Filtertopf und Filterkopf gegeneinander in deren miteinander verbundenem Zustand dient hier ein auf dem Außenumfang des Filtertopfs in einem axialen Abstand zu dessen Bajonettelementen angeordneter Dichtring.

Als nachteilig wird bei den zuvor beschriebenen Vorrichtungen nach dem Stand der Technik angesehen, dass zum Erneuern der Dichtung im Rahmen einer Filterwartung mit Filterelementwechsel zusätzliche Handgriffe zum Entfernen der alten Dichtung vom die Dichtung tragenden Gehäuseteil und zum Anbringen einer neuen Dichtung an diesem Gehäuseteil erforderlich sind, die erfahrungsgemäß gelegentlich aus Fahrlässigkeit oder Unkenntnis unterbleiben und dann oft zu Undichtigkeiten führen.

Für die vorliegende Erfindung stellt sich daher die Aufgabe, eine Vorrichtung der eingangs genannten Art zu schaffen, die die genannten Nachteile vermeidet und bei der bei jedem Wechsel des Abscheideelementes auch ein Wechsel der die Gehäuseteile gegeneinander abdichtenden Dichtung gewährleistet wird. Zudem soll die Erfindung es ermöglichen, weitere, bei Bedarf gewünschte positive Eigenschaften mit geringem Fertigungs- und Montageaufwand zu erzielen.

Die Lösung der Aufgabe gelingt erfindungsgemäß mit einer Vorrichtung der eingangs genannten Art, die dadurch gekennzeichnet ist, dass die ersten Verbindungsmittel oder die zweiten Verbindungsmittel wenigstens eine in Verbindungsmittelaxialrichtung verlaufende Verbindungsmittelunterbrechung aufweisen, dass das Abscheideelement wenigstens einen Positionierarm aufweist, der radial außen vom Abscheideelement verläuft und der so am Abscheideelement angeordnet ist, dass er in einem in die Vorrichtung eingebauten Zustand des Abscheideelementes passend in der Höhe des axialen Überlappungsbereichs von Gehäuse und Gehäusedeckel zu liegen kommt, dass der Positionierarm im Einbauzustand des Abscheideelementes und bei mit dem Gehäuse verbundenem Gehäusedeckel in einer der wenigstens einen Verbindungsmittelunterbrechung entsprechenden Lage und Ausrichtung verlaufend zumindest teilweise in der Verbindungsmittelunterbrechung aufgenommen ist und dass die Dichtung oder ein die Dichtung tragender Dichtungsträger mit dem wenigstens einen Positionierarm verbunden oder einstückig ausgebildet ist.

Bei den hier behandelten Vorrichtungen muss im Betrieb der Gehäusedeckel mediumdicht mit dem Gehäuse verbunden sein, um einen unerwünschten oder sogar gefährlichen Mediumaustritt aus der Vorrichtung in die Umwelt sicher zu vermeiden. Dazu ist zwischen dem Gehäuse und dem Gehäusedeckel eine diese in ihrem miteinander verbundenen Zustand gegeneinander abdichtende Dichtung angeordnet. Um die Dichtigkeit auch nach einer Wartung zu gewährleisten, ist es üblich oder sogar vorgeschrieben, bei jeder Wartung der Vorrichtung mit Abscheideelementwechsel auch die Dichtung zwischen Gehäuse und Gehäusedeckel zu erneuern. Gängige Praxis ist es, einem als Ersatzteil vorgesehenen, verpackten frischen Abscheideelement eine frische Dichtung als loses Einzelteil beizulegen, damit das Wartungspersonal neben dem Abscheideelement auch die Dichtung austauscht. Es ist aber in der Praxis relativ häufig festzustellen, dass das Wartungspersonal aufgrund mangelnder Sorgfalt oder aus Unkenntnis nur das Abscheideelement, nicht aber die Dichtung, erneuert oder die frische Dichtung nicht korrekt einbaut. Um dem vorzubeugen, ist erfindungsgemäß vorgesehen, dass die Dichtung oder ein die Dichtung tragender Dichtungsträger mit dem wenigstens einen Positionierarm des Abscheideelementes verbunden oder einstückig ausgebildet ist. Auf diese Weise wird vorteilhaft sichergestellt, dass automatisch bei jedem Wechsel des Abscheideelementes auch die Dichtung mit gewechselt wird.

Gemäß der Erfindung werden weiterhin die Mittel zum Zentrieren und Fixieren des Abscheideelementes in den Bereich der Verbindung zwischen Gehäuse und Gehäusedeckel der Vorrichtung gelegt. Hiermit wird vorteilhaft erreicht, dass bei mit dem Gehäuse verbundenem Gehäusedeckel automatisch der wenigstens eine Positionierarm in der Verbindungsmittelunterbrechung aufgenommen und dadurch in seiner Lage fixiert ist, was zugleich sowohl die gewünschte Positionierung und Zentriereng des Abscheideelementes als auch dessen Sperrung gegen eine unerwünschte Verdrehung in Umfangsrichtung bewirkt. Wenn im Rahmen einer Wartung die Verbindung zwischen Gehäuse und Gehäusedeckel gelöst ist, ist zugleich auch der mindestens eine Positionierarm frei, sodass dann das Abscheideelement unbehindert aus der Vorrichtung entnommen und durch ein neues, gleiches Abscheideelement mit Positionierarm oder Positionierarmen und mit der Dichtung ersetzt werden kann. Beim Einbau des Abscheideelementes ist lediglich darauf zu achten, dass der wenigstens eine Positionierarm passend in der zugehörigen Verbindungsmittelunterbrechung zu liegen kommt. Die wenigstens eine Verbindungsmittelunterbrechung und der zugehörige wenigstens eine Positionierarm sind dabei selbstverständlich so ausgebildet, dass die zum Herstellen und Lösen der Verbindung zwischen Gehäuse und Gehäusedeckel nötige Relativdrehung dieser beiden Teile zueinander nicht behindert wird.

Insbesondere zwecks einer günstigen Kräfteverteilung ist bevorzugt vorgesehen, dass über den Umfang der ersten Verbindungsmittel oder der zweiten Verbindungsmittel verteilt mehrere Verbindungsmittelunterbrechungen vorgesehen sind und dass das Abscheideelement mehrere entsprechend den Verbindungsmittelunterbrechungen passend angeordnete Positionierarme aufweist.

Um einen Einbau eines ungeeigneten Abscheideelementes in die Vorrichtung und dadurch verursachte Funktionsstörungen möglichst zu verhindern, wird vorgeschlagen, dass die Verbindungsmittelunterbrechungen der ersten Verbindungsmittel oder der zweiten Verbindungsmittel und die Positionierarme miteinander eine Schlüssel-Schloss-Codierung bilden.

Bevorzugt ist zur Realisierung der genannten Schlüssel-Schloss-Codierung vorgesehen, dass die Verbindungsmittelunterbrechungen der ersten Verbindungsmittel oder der zweiten Verbindungsmittel und die Positionierarme in Umfangsrichtung unregelmäßig verteilt sind und/oder dass die Verbindungsmittelunterbrechungen der ersten Verbindungsmittel oder der zweiten Verbindungsmittel untereinander in Umfangsrichtung unterschiedlich breit sind und die Positionierarme eine dazu passende in Umfangsrichtung unterschiedliche Breite aufweisen.

Um den Zusammenbau der Vorrichtung zu erleichtern, sieht eine Weiterbildung der Vorrichtung vor, dass der/jeder Positionierarm in der zugehörigen Verbindungsmittelunterbrechung mittels zusammenwirkender Rastelemente lösbar verrastbar ist. Auf diese Weise ist eine leicht realisierbare Vormontage des Abscheideelementes am Gehäuse oder am Gehäusedeckel möglich, wodurch Montagefehler weitestgehend vermieden werden.

Der Positionierarm oder die Positionierarme können auf unterschiedliche Art und Weise am Abscheideelement angeordnet sein, welches selbst auch unterschiedlich ausgeführt sein kann.

Eine erste diesbezügliche Ausgestaltung ist dadurch gekennzeichnet, dass das Abscheideelement eine hohlzylindrische Grundform mit einem Abscheidematerialkörper und zwei diesen stirnseitig abdeckenden Stirnscheiben hat und dass der/jeder Positionierarm mit einer der Stirnscheiben des Abscheideelementes verbunden oder einstückig ist oder dass der/jeder Positionierarm mit dem Abscheidematerialkörper des Abscheideelementes in Umfangs- und Axialrichtung positionsfest verbunden ist.

Eine weitere diesbezügliche Ausgestaltung schlägt vor, dass das Abscheideelement einen Abscheidematerialkörper mit einer hohlzylindrischen Grundform und mit einem darin angeordneten Stützkörper aufweist und dass der/jeder Positionierarm mit dem Stützkörper des Abscheideelementes verbunden oder einstückig ist. In dieser Ausführung kann das Abscheideelement mit oder ohne Stirnscheiben ausgeführt sein. So kann das Abscheideelement hier beispielsweise ein Faserabscheider oder Wickelkörper sein, der keine Stirnscheiben hat und der beispielsweise in einem Ölnebelabscheider für das Kurbelgehäuseentlüftungsgas einer Brennkraftmaschine einsetzbar ist.

Gemäß einer dritten diesbezüglichen Ausgestaltung ist vorgesehen, dass das Abscheideelement einen aus zwei jeweils eine hohlzylindrische Grundform aufweisenden Teil-Abscheidematerialkörpern gebildeten Abscheidematerialkörper aufweist, dass zwei einander zugewandten Stirnseiten der beiden Teil-Abscheidematerialkörper mittels einer Zwischenscheibe miteinander verbunden sind und dass der/ jeder Positionierarm mit der Zwischenscheibe des Abscheideelementes verbunden oder einstückig ist.

Die Dichtung kann als Dichtring radial außen auf dem Dichtungsträger oder axial stirnseitig an dem Dichtungsträger angeordnet sein.

Alternativ kann die Dichtung an den Dichtungsträger angespritzt oder als separat hergestelltes Bauteil auf den Dichtungsträger aufgesetzt sein.

Weiter besteht die Möglichkeit, dass der/jeder Positionierarm, der Dichtungsträger und die Dichtung einstückig miteinander aus einem thermoplastischen Elastomer gebildet sind. Das thermoplastische Elastomer hat dabei Eigenschaften, die für eine Dichtung geeignet sind.

Bei der erfindungsgemäßen Vorrichtung ist vorzugsweise die Verbindung zwischen Gehäuse und Gehäusedeckel mit den ersten Verbindungsmitteln und den zweiten Verbindungsmitteln durch einen axialen Überlappungsbereich von Gehäuse und Gehäusedeckel mit zusammenwirkenden Schraubgewinden oder zusammenwirkenden Bajonettverbindungselementen gebildet.

Schließlich ist die Vorrichtung bevorzugt ein Ölfilter oder ein Kraftstofffilter oder ein Ölnebelabscheider einer Brennkraftmaschine eines Kraftfahrzeuges. Bei diesen konkreten Ausgestaltungen und Verwendungen kommen die vorteilhaften Eigenschaften der erfindungsgemäßen Vorrichtung besonders gut und nützlich zur Geltung.

Im Folgenden werden Ausführungsbeispiele der Erfindung anhand einer Zeichnung erläutert. Die Figuren der Zeichnung zeigen:
- Figur 1: eine erste Vorrichtung zum Reinigen von flüssigen oder gasförmigen Medien, im Längsschnitt,
- Figur 1a: das in Figur 1 eingekreiste Detail in vergrößerter Darstellung,
- Figur 2: die Vorrichtung aus Figur 1 im Querschnitt gemäß der Schnittlinie II - II in Figur 1,
- Figur 3: eine zweite Vorrichtung, im Längsschnitt,
- Figur 4: die Vorrichtung aus Figur 3 im Querschnitt gemäß der Schnittlinie B - B in Figur 3,
- Figur 5: die Vorrichtung aus Figur 3 im Querschnitt gemäß der Schnittlinie C-C in Figur 3,
- Figur 6: ein Abscheideelement der Vorrichtung aus Figur 3, in Ansicht schräg von oben,
- Figur 7: ein Gehäuse der Vorrichtung aus Figur 3, in Ansicht schräg von oben,
- Figur 8: eine dritte Vorrichtung, im Längsschnitt,
- Figur 9: die Vorrichtung aus Figur 8 im Querschnitt gemäß der Schnittlinie IX-IX in Figur 8,
- Figur 10: eine vierte Vorrichtung, im Längsschnitt,
- Figur 10a: das in Figur 10 eingekreiste Detail in vergrößerter Darstellung,
- Figur 11: die Vorrichtung aus Figur 10 im Querschnitt gemäß der Schnittlinie XI-XI in Figur 10,
- Figur 12: eine fünfte Vorrichtung, im Längsschnitt,
- Figur 13: die Vorrichtung aus Figur 12 im Querschnitt gemäß der Schnittlinie XIII - XIII in Figur 10,
- Figur 14: eine sechste Vorrichtung, im Längsschnitt,
- Figur 14a: das in Figur 14 eingekreiste Detail in vergrößerter Darstellung,
- Figur 15: die Vorrichtung aus Figur 14 im Querschnitt gemäß der Schnittlinie XV - XV in Figur 14,
- Figur 16: eine siebte Vorrichtung, im Längsschnitt,
- Figur 16a: das in Figur 16 eingekreiste Detail in vergrößerter Darstellung,
- Figur 17: die Vorrichtung aus Figur 16 im Querschnitt gemäß der Schnittlinie XVII - XVII in Figur 14,
- Figur 18: eine achte Vorrichtung, im Längsschnitt,
- Figur 19: die Vorrichtung aus Figur 18 im Querschnitt gemäß der Schnittlinie XIX - XIX in Figur 18,
- Figur 20: einen Gehäusedeckel der Vorrichtung aus Figur 18, in Ansicht schräg von unten,
- Figur 21: ein Abscheideelement der Vorrichtung aus Figur 18, in Ansicht schräg von oben,
- Figur 22: eine neunte Vorrichtung, im Längsschnitt,
- Figur 23: die Vorrichtung aus Figur 22 im Querschnitt gemäß der Schnittlinie XXIII - XXIII in Figur 22,
- Figur 24: die Vorrichtung aus Figur 22, in Ansicht,
- Figur 25: ein Abscheideelement der Vorrichtung aus Figur 22, in Ansicht schräg von oben,
- Figur 26: einen Gehäusedeckel der Vorrichtung aus Figur 22, in Ansicht schräg von unten,
- Figur 27: ein Gehäuse der Vorrichtung aus Figur 22, in Ansicht schräg von oben,
- Figur 28: eine zehnte Vorrichtung, ohne Gehäusedeckel, in Ansicht,
- Figur 29: die Vorrichtung aus Figur 28 in gleicher Darstellung, zusammen mit Verbindungsmitteln des Gehäusedeckels,
- Figur 30: eine elfte Vorrichtung, im Längsschnitt,
- Figur 31: die Vorrichtung aus Figur 30 im Querschnitt gemäß der Schnittlinie XXXI - XXXI in Figur 30,
- Figur 32: einen Stützkörper der Vorrichtung aus Figur 30, in Draufsicht,
- Figur 33: den Stützkörper aus Figur 32, im Längsschnitt,
- Figur 34: eine zwölfte Vorrichtung, im Längsschnitt,
- Figur 35: die Vorrichtung aus Figur 34 im Querschnitt gemäß der Schnittlinie XXXV - XXXV in Figur 34,
- Figur 36: einen Stützkörper der Vorrichtung aus Figur 34, in Draufsicht, und
- Figur 37: den Stützkörper aus Figur 36, im Längsschnitt.

In der folgenden Figurenbeschreibung werden gleiche Teile in den verschiedenen Figuren der Zeichnung stets mit den gleichen Bezugsziffern bezeichnet, sodass nicht zu jeder Zeichnungsfigur jede Bezugsziffer neu erläutert werden muss.

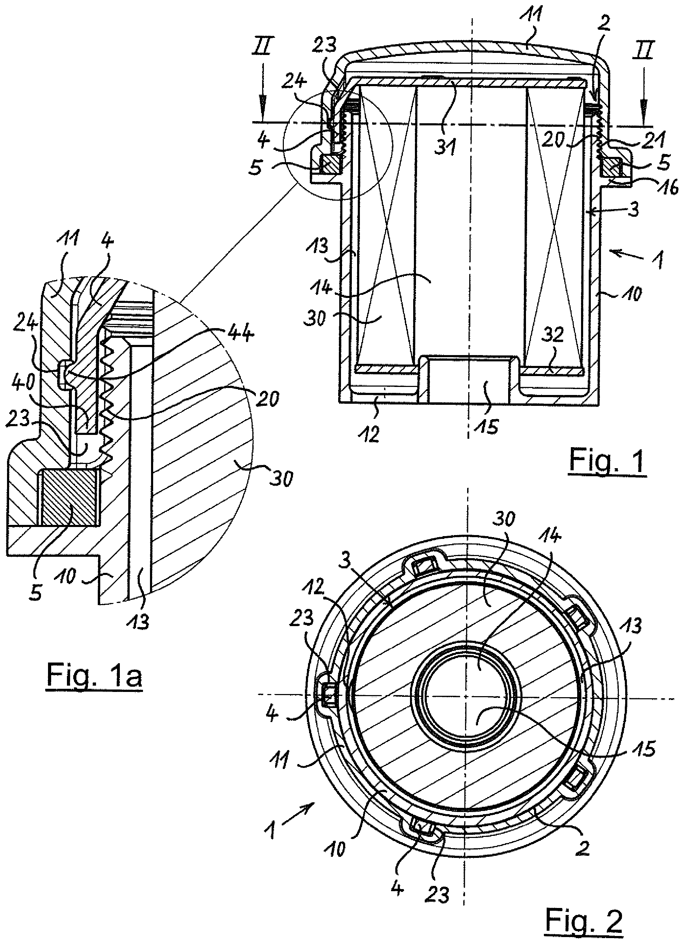

Figur 1 der Zeichnung zeigt eine erste Vorrichtung 1 zum Reinigen von flüssigen oder gasförmigen Medien, wie beispielsweise Schmieröl, Kraftstoff oder Kurbelgehäuseentlüftungsgas einer Brennkraftmaschine, im Längsschnitt. Die Vorrichtung 1 besitzt ein becherförmiges Gehäuse 10, das oberseitig mit einem Gehäusedeckel 11 verschlossen ist. Das Gehäuse 10 und der Gehäusedeckel 11 sind dabei mittels einer Verbindung 2, bestehend aus ersten Verbindungsmitteln 20 am Gehäuse 10 und zweiten Verbindungsmitteln 21 am Gehäusedeckel 11, lösbar miteinander verbunden. Konkret ist hier die Verbindung 2 eine Schraubverbindung. Zur Abdichtung zwischen Gehäuse 10 und Gehäusedeckel 11 in deren miteinander verbundenem Zustand ist zwischen diesen eine umlaufende Dichtung 5 angeordnet, die axial dichtend zwischen einem unteren Rand des Gehäusedeckels 11 und einem Dichtkragen 16 des Gehäuses 10 liegt. Die Dichtung 5 ist in diesem Ausführungsbeispiel ein separates Einzelteil.

Im Gehäuse 10 ist ein Abscheideelement 3 auswechselbar angeordnet, welches aus einem Abscheidematerialkörper 30 sowie einer oberen Stirnscheibe 31 und einer unteren Stirnscheibe 32, die den Abscheidematerialkörper 30 stirnseitig einfassen, besteht. Mittels einer zentralen Durchbrechung in der unteren Stirnscheibe 32 ist das Abscheideelement 3 auf einen rohrstutzenförmigen Mediumauslass 15 aufgesteckt. Radial außen vom Mediumauslass 15 ist im Boden des Gehäuses 10 ein Mediumeinlass 12 vorgesehen, der in einen Rohmediumbereich 13 radial außerhalb des Abscheideelementes 3 mündet. Radial innen vom Abscheidematerialkörper 30 befindet sich ein Reinmediumbereich 14.

Mit der oberen Stirnscheibe 31 sind hier mehrere Positionierarme 4 einstückig ausgebildet, von denen hier links in Figur 1 einer sichtbar ist. Der Positionierarm 4 geht vom radial äußeren Rand der oberen Stirnscheibe 31 aus und verläuft zunächst schräg nach außen und dann vertikal nach unten.

Wie die Figur 1 und das vergrößerte Detail in Figur 1a veranschaulichen, verläuft jeder Positionierarm 4 durch eine Verbindungsmittelunterbrechung 23 in den zweiten Verbindungsmitteln 21 am Gehäusedeckel 11. Ein freies Ende 40 der Positionierarme 4 liegt hier in einem Abstand oberhalb der Dichtung 5 in der Verbindungsmittelunterbrechung 23. Mittels der Positionierarme 4 ist das Abscheideelement 3 innerhalb der Vorrichtung 1 zentriert sowie in Umfangsrichtung verdrehfest fixiert.

Figur 2 zeigt die Vorrichtung 1 aus Figur 1 im Querschnitt gemäß der Schnittlinie II - II in Figur 1. Radial außen ist zunächst der Gehäusedeckel 11 geschnitten. Radial innen davon verläuft die Umfangswand des Gehäuses 10. Zwischen Gehäuse 10 und Gehäusedeckel 11 liegt die Schraubverbindung 2. An über den Umfang der Vorrichtung 1 gleichmäßig verteilten Stellen liegt jeweils eine der Verbindungsmittelunterbrechungen 23, durch welche jeweils einer der Positionierarme 4 verläuft.

Die Anordnung der Verbindungsmittelunterbrechungen 23 und der Positionierarme 4 ist in weiten Grenzen variierbar und kann vorteilhaft zur Bildung einer Schlüssel-Schloss-Codierung genutzt werden, um den Einbau nur bestimmter, geeigneter Abscheideelemente 3 in die Vorrichtung 1 zu erlauben.

Radial innen von der Umfangswand des Gehäuses 10 liegt der Rohmediumbereich 13, auf den radial weiter nach innen der Abscheidematerialkörper 30 des Abscheideelementes 3 folgt. Links in Figur 2 ist radial außerhalb des Abscheideelementes 3 noch ein kleiner Teil des Mediumeinlasses 12 sichtbar. Im Zentrum der Figur 2 liegen im Inneren des Abscheideelementes 3 der Reinmediumbereich 14 und im Hintergrund der Mediumauslass 15. Die Figur 2 veranschaulicht besonders deutlich, dass hier das Abscheideelement 3 verdrehfest in der Vorrichtung 1 aufgenommen ist und in dieser zentriert wird.

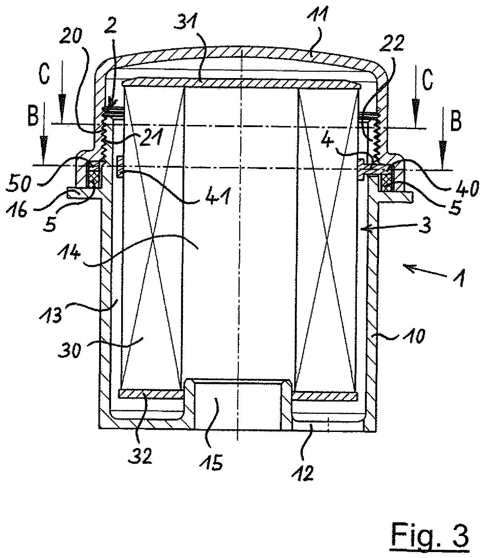

Figur 3 zeigt eine zweite Vorrichtung 1, wieder im Längsschnitt. Auch bei dieser Vorrichtung 1 sind über den Umfang verteilt mehrere Positionierarme 4 vorgesehen, von denen in Figur 3 rechts einer sichtbar ist. Die Positionierarme 4 sind hier mit einem Tragring 41 einstückig ausgebildet, der seinerseits auf dem Außenumfang des Abscheidematerialkörpers 30 in Umfangsrichtung sowie Axialrichtung fest angebracht, insbesondere verklebt oder verschweißt, ist. Die Positionierarme 4 verlaufen hier durch eine Verbindungsmittelunterbrechung 22, die in den ersten Verbindungsmitteln 20 am Gehäuse 10 ausgebildet ist, wie rechts oben in Figur 3 sichtbar ist.

Am radial äußeren Ende der Positionierarme 4 gehen diese einstückig in einen Dichtungsträger 50 über, an dessen in Axialrichtung nach unten weisender Seite eine Dichtung 5 in Form eines Dichtrings angeordnet ist, beispielsweise angespritzt oder angeklebt ist. Die Dichtung 5 ist bei diesem Ausführungsbeispiel somit ein integraler Bestandteil des Abscheideelementes 3, so dass bei einem Austausch des Abscheideelementes 3 im Rahmen einer Wartung der Vorrichtung 1 automatisch auch die Dichtung 5 mit ausgetauscht und erneuert und dabei zwangsläufig korrekt positioniert wird.

In ihren weiteren Teilen entspricht die Vorrichtung 1 dem zuvor erläuterten Ausführungsbeispiel, auf dessen Beschreibung diesbezüglich verwiesen wird.

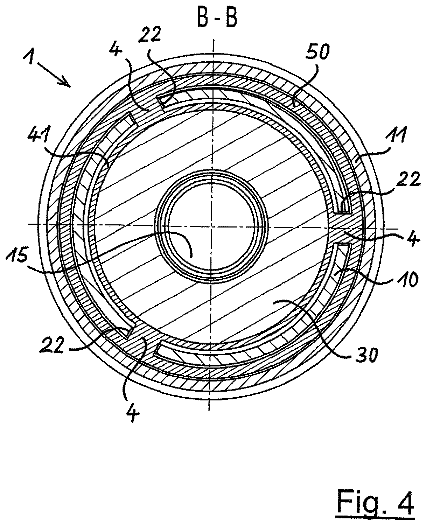

Figur 4 zeigt die Vorrichtung 1 aus Figur 3 im Querschnitt gemäß der Schnittlinie B - B in Figur 3, wobei hier erkennbar wird, dass bei diesem Ausführungsbeispiel insgesamt vier Positionierarme 4 über den Umfang verteilt vorgesehen sind. Jeder Positionierarm 4 verläuft durch eine der Verbindungsmittelunterbrechungen 22 im Gehäuse 10. Radial innen sind die Positionierarme 4 einstückig mit dem Tragring 41 ausgebildet, der seinerseits auf dem Außenumfang des Abscheidematerialkörpers 30 fest angebracht ist. Nach radial außen gehen die Positionierarme 4 einstückig in den Dichtungsträger 50 über. Radial außen vom Dichtungsträger 50 ist der Gehäusedeckel 11 geschnitten. Radial innen vom Dichtungsträger 50 verläuft der Schnitt durch das Gehäuse 10 und im Zentrum der Figur 4 ist im Hintergrund der Mediumauslass 15 erkennbar.

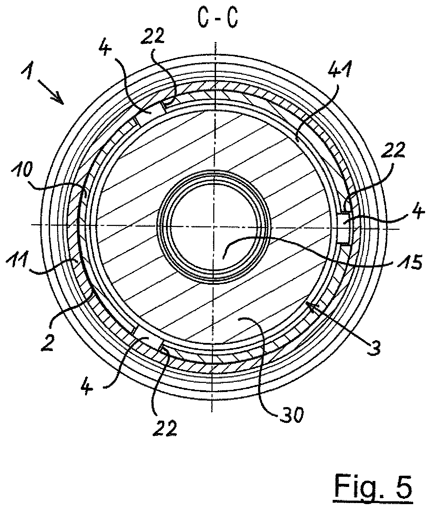

Figur 5 zeigt die Vorrichtung 1 aus Figur 3 im Querschnitt gemäß der oberhalb der Schnittlinie B - B verlaufenden zweiten Schnittlinie C - C in Figur 3. Zentral in Figur 5 liegt im Hintergrund wieder der Mediumauslass 15. Um diesen herum liegt der Abscheidematerialkörper 30 des Abscheideelementes 3. Auf dessen Außenumfang sitzt der Tragring 41, der einstückig mit den hier von oben sichtbaren Positionierarmen 4 ist. Radial außen von den Positionierarmen 4 verläuft der Gehäusedeckel 11. Radial innen davon liegt die Umfangswand des Gehäuses 10. Zwischen dem Gehäuse 10 und dem Gehäusedeckel 11 liegt deren Verbindung 2, auch hier in Form einer Schraubverbindung. In Umfangsrichtung sind in der Verbindung die drei Verbindungsmittelunterbrechungen 22 vorgesehen, in welchen die Positionierarme 4 liegen.

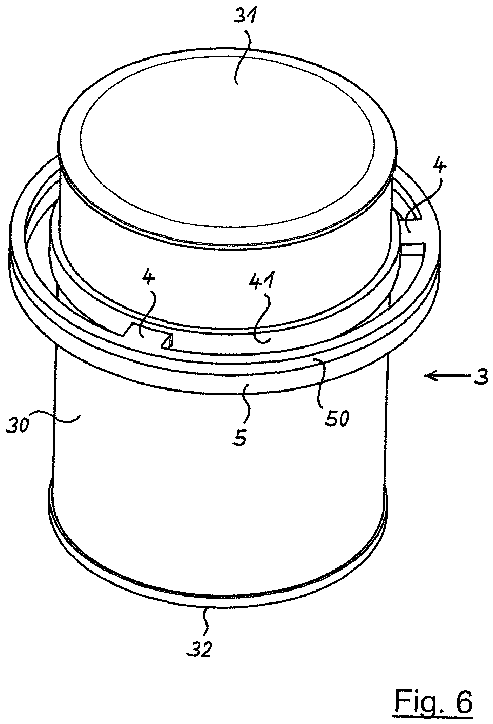

Figur 6 zeigt das Abscheideelement 3 der Vorrichtung 1 aus Figur 3 in Ansicht schräg von oben. Oben ist die obere Stirnscheibe 31 und unten die untere Stirnscheibe 32 sichtbar, zwischen denen sich der von diesen eingefasste Abscheidematerialkörper 30 erstreckt. Auf dem Außenumfang des Abscheidematerialkörpers 30 sitzt in Umfangs- und Axialrichtung fixiert der Tragring 41, von dessen Außenumfang die Positionierarme 4 in Radialrichtung nach außen hin einstückig abgehen. Radial außen gehen die Positionierarme 4 einstückig in den ringförmig umlaufenden Dichtungsträger 50 über, der an seiner in Axialrichtung nach unten weisenden Seite die Dichtung 5 trägt.

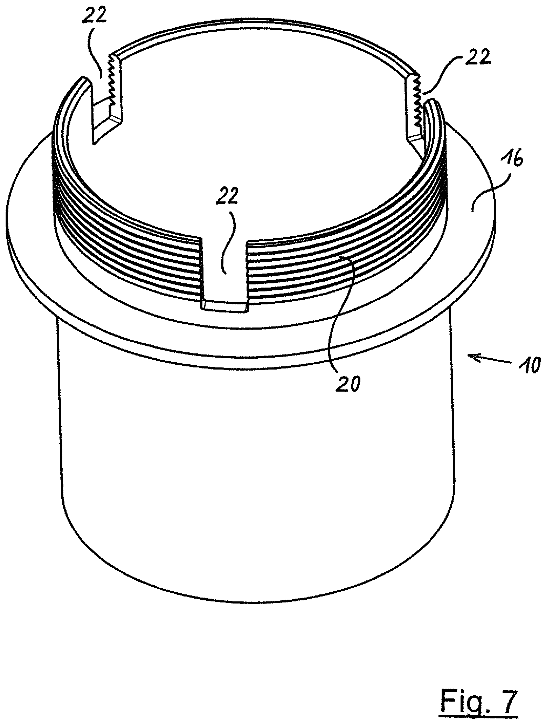

Figur 7 zeigt das Gehäuse 10 der Vorrichtung 1 aus Figur 3 in Ansicht schräg von oben. Das Gehäuse 10 ist becherförmig und besitzt an seinem oberen Randbereich die ersten Verbindungsmittel 20 in Form eines Schraubgewindes, in welchem in Umfangsrichtung verteilt die drei Verbindungsmittelunterbrechungen 22 eingeformt sind. Bei diesem Beispiel erstrecken sich die Verbindungsmittelunterbrechungen 22 über die volle Materialstärke des Gehäuses 10; alternativ können die Verbindungsmittelunterbrechungen 22 auch als von außen her nur über einen Teil der Materialstärke des Gehäuses 10 reichende Nuten ausgeführt sein. Unterhalb der Verbindungsmittel 20 geht von der Umfangswand des Gehäuses 10 der Dichtkragen 16 in Radialrichtung nach außen hin aus.

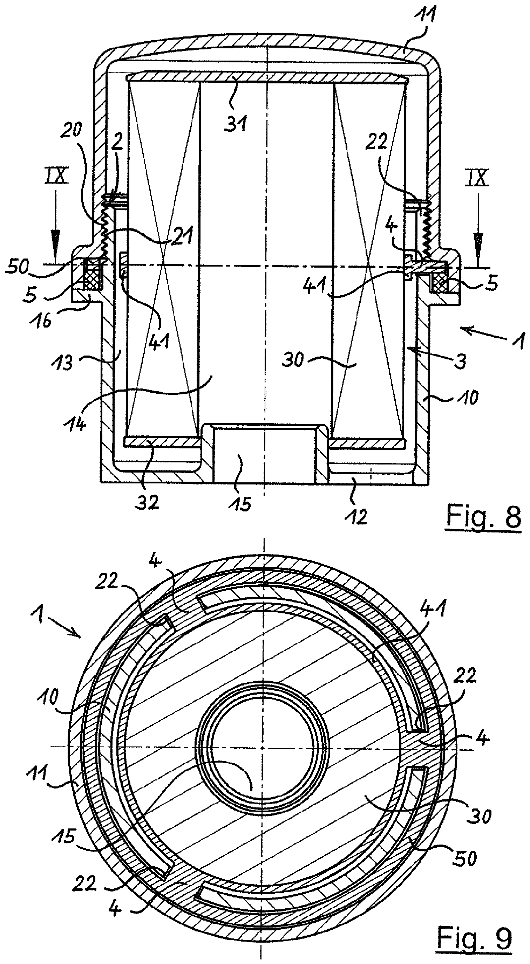

Figur 8 zeigt eine dritte Vorrichtung, wieder im Längsschnitt. Die Ausführung der Positionierarme 4 mit dem Tragring 41, dem Dichtungsträger 50 und der Dichtung 5 entspricht hier dem zuvor beschriebenen Beispiel. Unterschiedlich ist die Anordnung der Positionierarme 4. Diese sind in Figur 8 entsprechend der kleineren Höhe des Gehäuses 10 und der größeren Höhe des Gehäusedeckels 11 in Axialrichtung weiter unten am Abscheidematerialkörper 30 des Abscheideelementes 3 angeordnet, damit die Positionierarme 4 passend in der Höhe des axialen Überlappungsbereiches von Gehäuse 10 und Gehäusedeckel 11 zu liegen kommen. Hinsichtlich der weiteren Einzelteile in Figur 8 wird auf die Beschreibung des vorhergehenden Ausführungsbeispiels verwiesen.

Figur 9 zeigt die Vorrichtung 1 aus Figur 8 im Querschnitt gemäß der Schnittlinie IX - IX in Figur 8. Radial außen geht in Figur 9 der Schnitt durch den Gehäusedeckel 11, woran sich radial innen der Dichtungsträger 50 anschließt. Der Dichtungsträger 50 ist einstückig mit den drei über den Umfang der Vorrichtung 1 verteilten Positionierarmen 4 und dem Tragring 41 ausgeführt, der um den Abscheidematerialkörper 30 herum verläuft und mit diesem verbunden ist. Radial innen vom Dichtungsträger 50 ist das Gehäuse 10 geschnitten. Die Positionierarme 4 werden jeweils von einer Verbindungsmittelunterbrechung 22 aufgenommen.

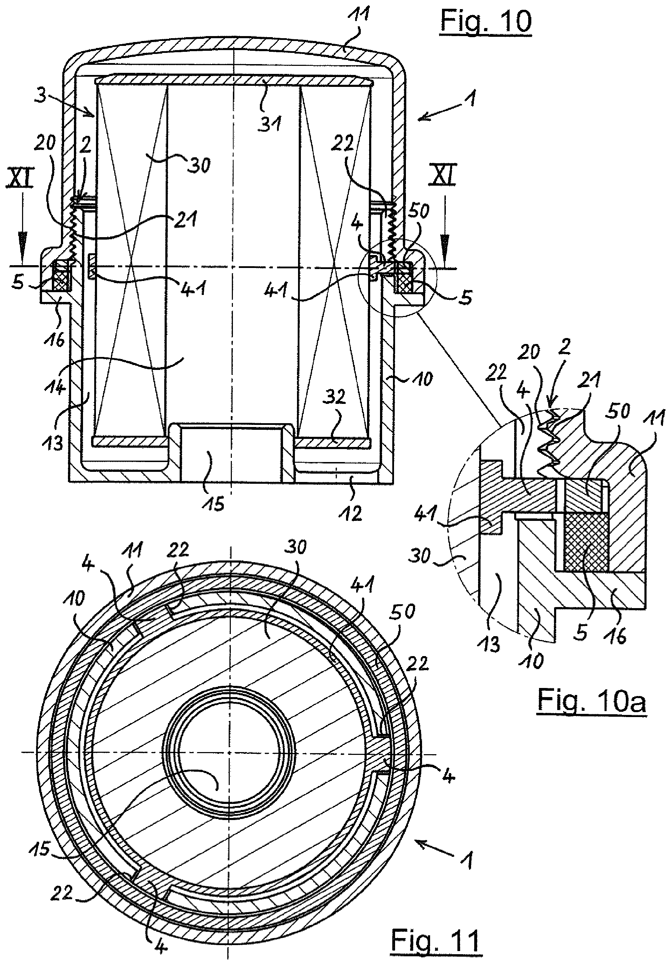

Figur 10 zeigt eine vierte Vorrichtung 1, ebenfalls im Längsschnitt. Diese Ausführung der Vorrichtung 1 entspricht im Wesentlichen dem zuvor beschriebenen Ausführungsbeispiel, wobei unterschiedlich ist, dass bei dem Beispiel nach Figur 10 die Positionierarme 4 keine Verbindung zum Dichtungsträger 50 aufweisen, was auch die Figur 10a mit dem in Figur 10 eingekreiste Detail in vergrößerter Darstellung verdeutlicht. Die Positionierarme 4 sorgen aber auch hierfür eine Zentrierung und für eine Fixierung des Abscheideelementes 3 in Umfangsrichtung der Vorrichtung 1.

Der Dichtungsträger 50 bildet hier zusammen mit der Dichtung 5 eine separate Einheit.

Figur 11 zeigt die Vorrichtung 1 aus Figur 10 im Querschnitt gemäß der Schnittlinie XI - XI in Figur 10. Radial außen ist der Gehäusedeckel 11 geschnitten, auf welchen radial innen davon der Dichtungsträger 50 folgt. Radial innen von diesem ist die Umfangswand des Gehäuses 10 geschnitten. In den Verbindungsmittelunterbrechungen 22 der Umfangswand des Gehäuses 10 liegen die Positionierarme 4, die radial innen einstückig in den Tragring 41 übergehen, welcher auf dem Außenumfang des Abscheidematerialkörpers 30 angebracht und festgelegt ist. Im Zentrum der Figur 11 ist wieder im Hintergrund der Mediumauslass 15 für in der Vorrichtung 1 gereinigtes Medium sichtbar.

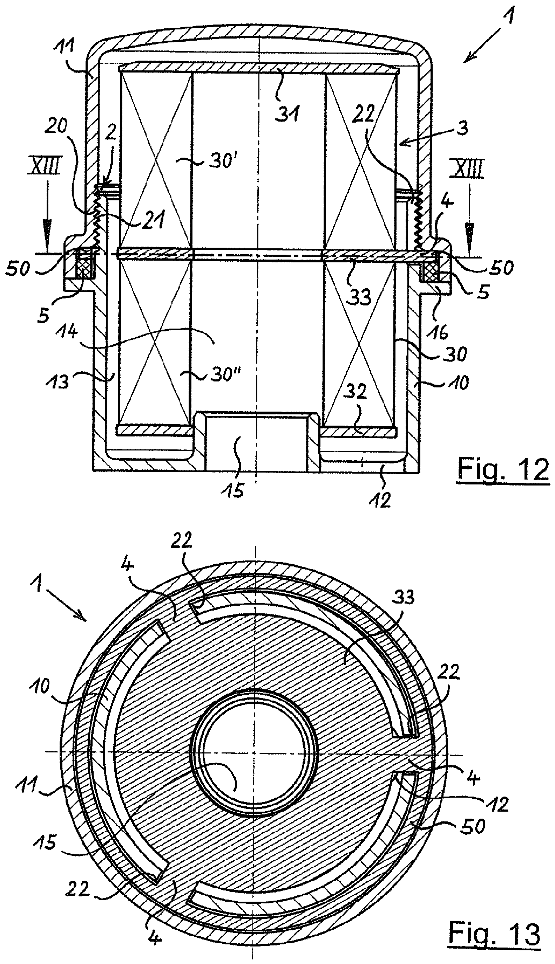

Die Figuren 12 und 13 zeigen eine fünfte Vorrichtung im Längsschnitt sowie in Querschnitt gemäß der Schnittlinie XIII-XIII in Figur 12. Für dieses Ausführungsbeispiel ist charakteristisch, dass der Abscheidematerialkörper 30 hier aus zwei Teil-Abscheidematerialkörpern 30', 30" gebildet ist. Oben und unten ist jeweils die obere und untere Stirnscheibe 31, 32 vorgesehen. Zusätzlich besitzt das Abscheideelement 30 eine Zwischenscheibe 33, mit der die nach unten weisende Stirnseite des oberen Teil-Abscheidematerialkörpers 30' und die nach oben weisende Stirnseite des unteren Teil-Abscheidematerialkörpers 30" verbunden ist.

Einstückig mit der Zwischenscheibe 33 sind hier mehrere, konkret drei, über den Umfang verteilt angeordnete Positionierarme 4 ausgeführt, die sich in Radialrichtung nach außen durch Verbindungsmittelunterbrechungen 22 in den ersten Verbindungsmitteln 20 des Gehäuses 10 erstrecken und das Abscheideelement 3 in der Vorrichtung 1 zentrieren und in Umfangsrichtung fixieren.

Radial außen gehen die Positionierarme 4 einstückig in den Dichtungsträger 50 über, der an seiner Unterseite die Dichtung 5 trägt. Im zusammengebauten Zustand der Vorrichtung 1 ist die Dichtung 5 mit dem Dichtungsträger 50 zwischen dem Gehäusedeckel 11 und dem Dichtkragen 16 am Gehäuse 10 axial dichtend eingespannt.

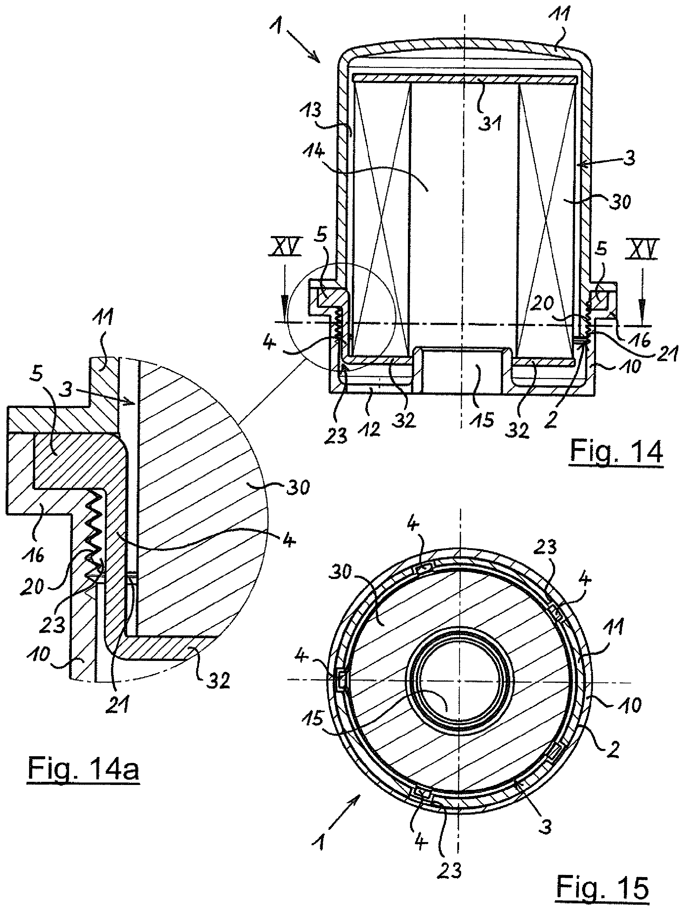

Die Figuren 14, 14 a und 15 zeigt eine sechste Vorrichtung 1 im Längsschnitt, in einem vergrößerten Detail sowie im Querschnitt gemäß der Schnittlinie XV - XV in Figur 14. Charakteristisch für dieses Beispiel ist, dass mehrere, hier fünf, mit der unteren Stirnscheibe 32 des Abscheideelementes 3 einstückige Positionierarme 4 vorgesehen sind. Hier verlaufen die Positionierarme 4 durch Verbindungsmittelunterbrechungen 23 in den zweiten Verbindungsmitteln 21 am Gehäusedeckel 11. Die einstückige Einheit aus unterer Stirnscheibe 32, Positionierarmen 4 und Dichtung 5 ist hier zweckmäßig aus einem thermoplastischen Elastomer gefertigt, der die nötigen mechanischen Eigenschaften und Dichtungseigenschaften in sich vereint.

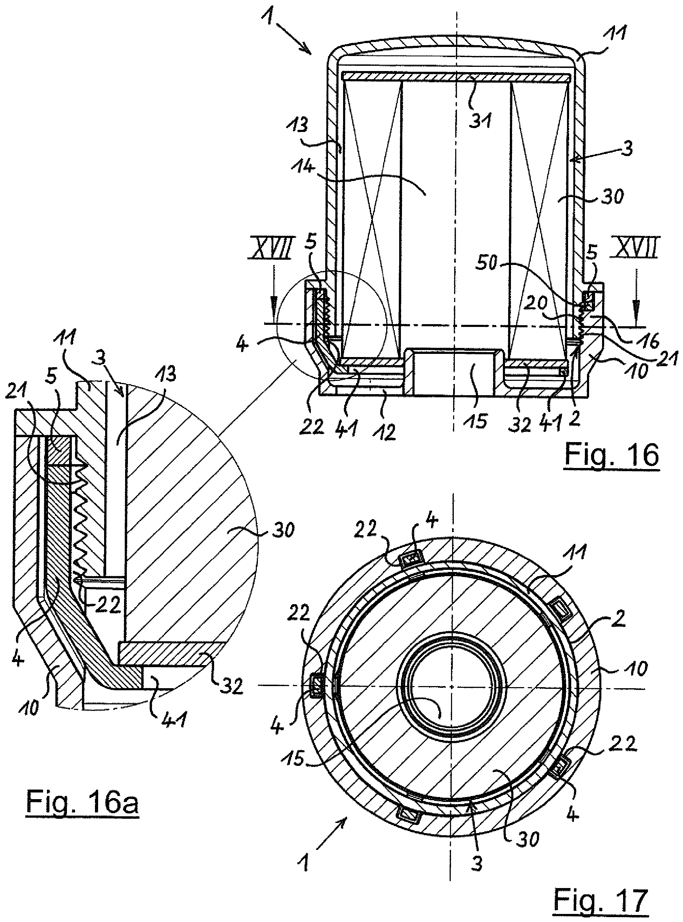

Die Figuren 16, 16a und 17 zeigt eine siebte Vorrichtung 1 im Längsschnitt, in einem vergrößerten Detail sowie im Querschnitt gemäß der Schnittlinie XVII - XVII in Figur 16. Bei diesem Beispiel sind die Positionierarme 4 mit der unteren Stirnscheibe 32 des Abscheideelementes 3 verbunden, konkret mittels des Tragrings 41 verklebt oder verschweißt. Der Tragring 41 und die Positionierarme 4 sind dabei einstückig miteinander ausgebildet.

Die Positionierarme 4 verlaufen hier in Richtung von unten nach oben durch Verbindungsmittelunterbrechungen 22 in den Verbindungsmitteln 20 am Gehäuse 10. An ihrem nach oben weisenden Endbereich sind die Positionierarme 4 einstückig mit dem umlaufenden Dichtungsträger 50 ausgeführt, welcher seinerseits an seiner Oberseite die Dichtung 5 trägt, welche das Gehäuse 10 und den Gehäusedeckel 11 in deren miteinander verbundenem Zustand gegeneinander abdichtet.

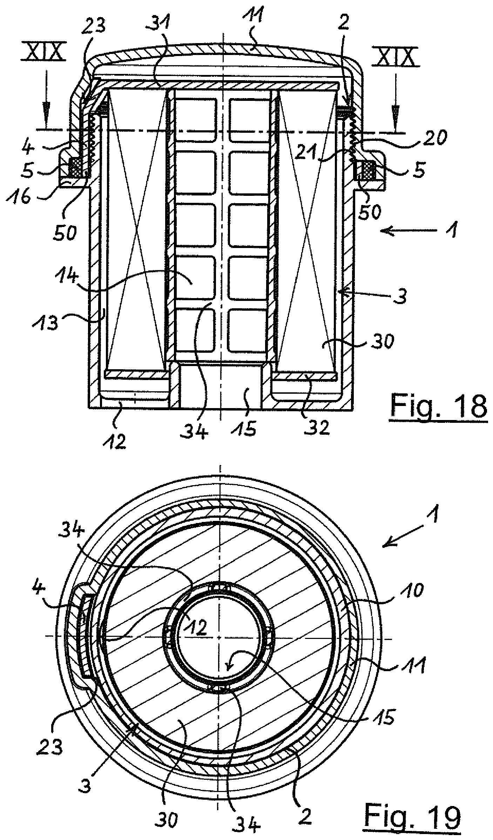

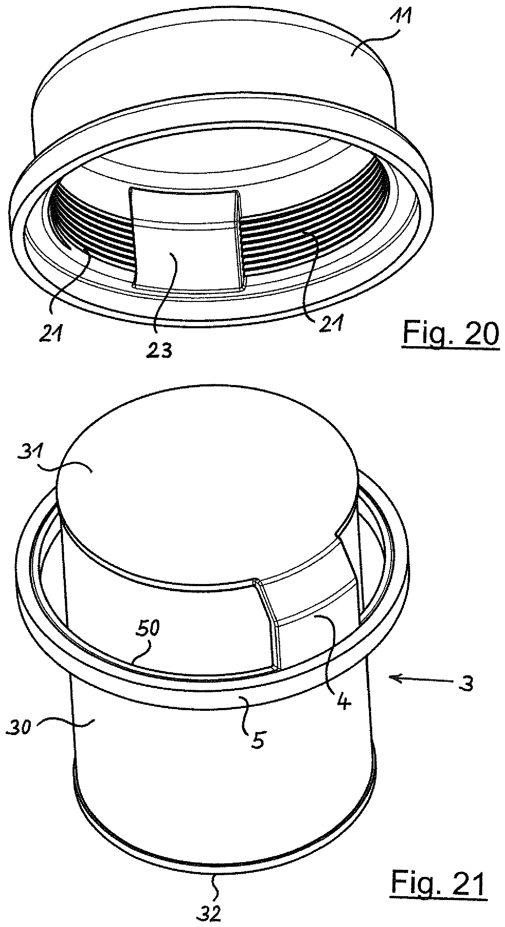

Die Figuren 18 bis 21 zeigen eine achte Vorrichtung, in Figur 18 im Längsschnitt und in Figur 19 im Querschnitt gemäß der Schnittlinie XIX - XIX in Figur 18. In Figur 20 ist der Gehäusedeckel 11 der Vorrichtung 1 in Ansicht schräg von unten gezeigt und in Figur 21 ist das Abscheideelement 3 der Vorrichtung 1 in Ansicht dargestellt.

Charakteristisch für dieses Ausführungsbeispiel ist, dass nur ein einziger Positionierarm 4 vorgesehen ist, der hier mit der oberen Stirnscheibe 31 des Abscheideelementes 3 einstückig ausgeführt ist und sich von dieser zunächst schräg und dann vertikal nach unten erstreckt. Hier verläuft der Positionierarme 4 durch eine Verbindungsmittelunterbrechung 23 in den Verbindungsmitteln 21 am Innenumfang des Gehäusedeckels 11.

Im Abscheideelement 3, konkret im Inneren des Abscheidematerialkörpers 30, ist hier ein hohlzylindrischer, gitterförmiger Stützkörper 34 angeordnet, der den Abscheidematerialkörper 30 im Betrieb bei Durchströmung in Radialrichtung von außen nach innen gegen ein Kollabieren schützt.

An den axial unteren Endbereich des Positionierarms 4 schließt sich einstückig der ringförmig umlaufende Dichtungsträger 50 an, der auf seinem Außenumfang die Dichtung 5 in Form eines im Querschnitt rechteckigen Dichtrings trägt. In dem in Figur 18 sichtbaren zusammengebauten Zustand der Vorrichtung 1 liegt die Dichtung 5 axial dichtend zwischen dem Dichtkragen 16 des Gehäuses 10 und dem Gehäusedeckel 11. Auch hier sorgt der einzelne Positionierarm 4 für eine Zentrierung des Abscheideelementes 3 in der Vorrichtung 1 sowie für eine Verdrehsicherung des Abscheideelementes 3 in Umfangsrichtung.

Figur 20 verdeutlicht die Anordnung der Verbindungsmittel 21 am Innenumfang des Gehäusedeckels 11 mit der hier darin angeordneten einzigen Verbindungsmittelunterbrechung 23.

Figur 21 veranschaulicht besonders die einstückige Ausführung der oberen Stirnscheibe 31 des Abscheideelementes 3 mit dem einzigen Positionierarm 4 und dem damit einstückigen Dichtungsträger 50. Auf dem Außenumfang des Dichtungsträgers 50 ist hier die Dichtung 5 angeordnet, entweder schwimmend oder alternativ fest, zum Beispiel verklebt oder verschweißt.

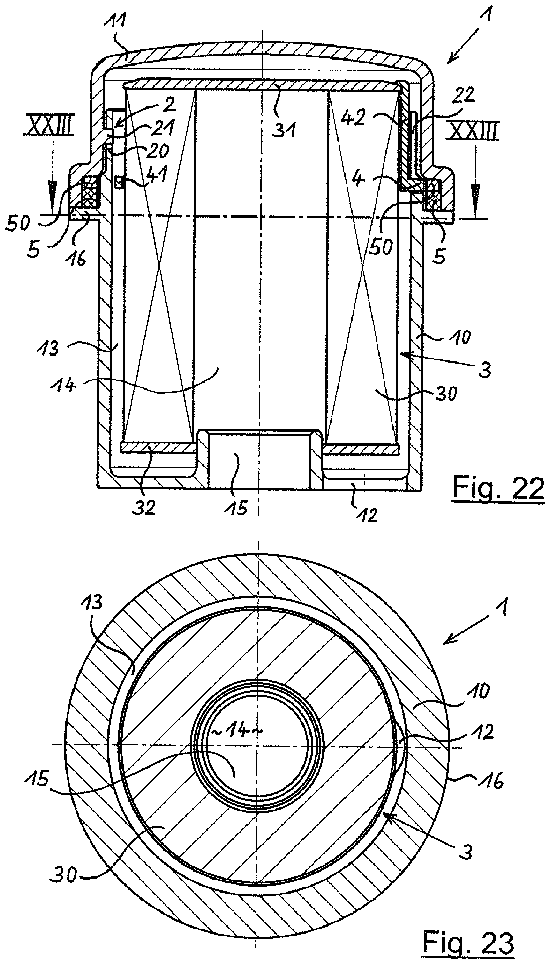

In den zuvor beschriebenen Ausführungsbeispielen sind die Verbindungsmittel 20 am Gehäuse 10 und die Verbindungsmittel 21 am Gehäusedeckel 11 zusammenwirkende Schraubgewinde. In den Figuren 22 bis 29 sind Ausführungsbeispiele gezeigt, bei denen die Verbindungsmittel 20 und 21 jeweils durch Bajonettverbindungselemente anstelle von Schraubgewinden gebildet sind. Auch die als Bajonettverbindungselemente ausgeführten Verbindungsmittel 20, 21 sind im Überlappungsbereich von Gehäuse 10 und Gehäusedeckel 11 angeordnet und bilden deren durch Verdrehen gegeneinander lösbare und herstellbare Verbindung 2. Anders als hier dargestellt, können sich die Bajonettverbindungsmittel auch über jeweils den gesamten Umfang des Überlappungsbereichs von Gehäuse und Gehäusedeckel erstrecken.

Es sind hier jeweils drei über den Umfang verteilt angeordnete Positionierarme 4 vorgesehen, wobei deren Zahl selbstverständlich auch kleiner oder größer sein kann. Die Positionierarme 4 sind einstückig mit dem Tragring 41 ausgebildet, der auf dem Außenumfang des Abscheidematerialkörpers 30 des Abscheideelementes 3 fixiert ist. Weiterhin ist jedem Positionierarm 4 ein Haltearm 42 einstückig zugeordnet, der sich vom Positionierarm 4 in Axialrichtung nach oben hin bis zur oberen Stirnscheibe 31 des Abscheideelementes 3 erstreckt und mit deren Rand verbunden ist, beispielsweise durch Verschweißen oder Verkleben oder Verrasten.

Jeder Positionierarm 4 erstreckt sich hier durch eine Verbindungsmittelunterbrechung 22 in den Verbindungsmitteln 20 am Gehäuse 10, wie rechts oben in Figur 22 erkennbar ist.

Radial außen von den Positionierarme 4 verläuft, ohne mit diesem verbunden zu sein, hier der separate, ringförmige Dichtungsträger 50 mit der an dessen Unterseite angebrachten Dichtung 5.

Alternativ zu der Darstellung in der Figur 22 können die Positionierarme 4 auch mit dem Dichtungsträger 50 verbunden oder einstückig ausgeführt sein, wenn eine gemeinsam austauschbare Einheit von Abscheideelement 3 und Dichtung 5 gewünscht ist.

Figur 23 zeigt die Vorrichtung 1 aus Figur 22 im Querschnitt gemäß der Schnittlinie XXIII - XXIII in Figur 22, die durch den Dichtkragen 16 des Gehäuses 10 verläuft. Radial innen davon liegt der Rohmediumbereich 13, auf den weiter nach innen der Abscheidematerialkörper 30 des Abscheideelementes 3 folgt. In dessen Zentrum liegt der Reinmediumbereich 14 mit dem im Hintergrund sichtbaren Auslass 15. Ganz rechts ist im Inneren des Gehäuses 10 noch ein kleiner Teil des unter dem Abscheideelement 3 liegenden Mediumeinlasses 12 sichtbar.

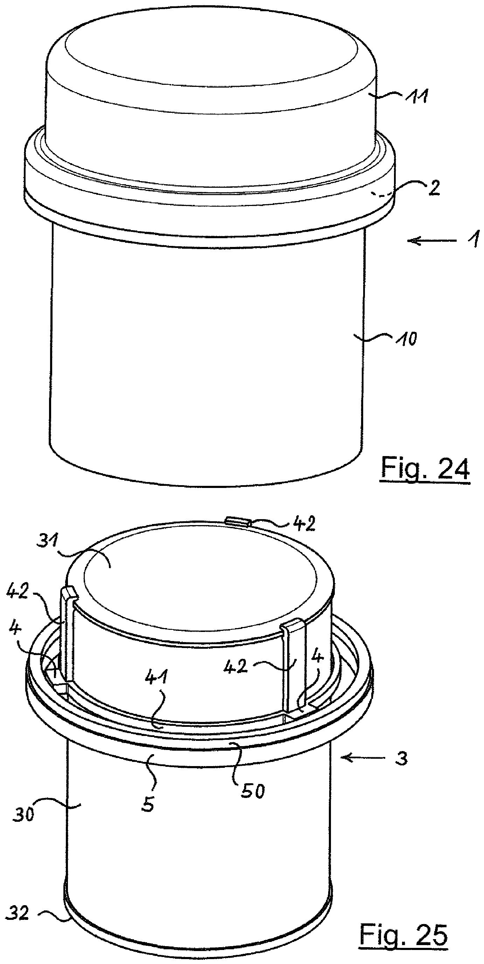

Figur 24 zeigt die zusammengebaute Vorrichtung 1 in einer Außenansicht, wobei unten das Gehäuse 10 und oben der Gehäusedeckel 11 sichtbar ist. Zwischen diesen liegt verdeckt deren durch relatives Verdrehen lösbare Verbindung 2.

Figur 25 zeigt das Abscheideelement 3 der Vorrichtung 1 gemäß den Figuren 22 bis 24 als Einzelteil. Der Abscheidematerialkörper 30 ist oben von der oberen Stirnscheibe 31 und unten von der unteren Stirnscheibe 32 eingefasst. Auf dem Außenumfang des Abscheidematerialkörpers 30 ist der Tragring 41 festgelegt, der mit den Positionierarmen 4 und den Haltearmen 42 einstückig ist. Die Halterarme 42 reichen bis zum radial äußeren Rand der oberen Stirnscheibe 31 und sind mit dieser verbunden.

Radial außen von den Positionierarmen 4 verläuft der Dichtungsträger 50 mit der Dichtung 5. Der Dichtungsträger 50 und die Dichtung 5 können eine separate, nicht mit den Positionierarmen 4 verbundene Einheit bilden. Alternativ kann der Dichtungsträger 50 mit den Positionierarmen 4 verbunden oder einstückig sein.

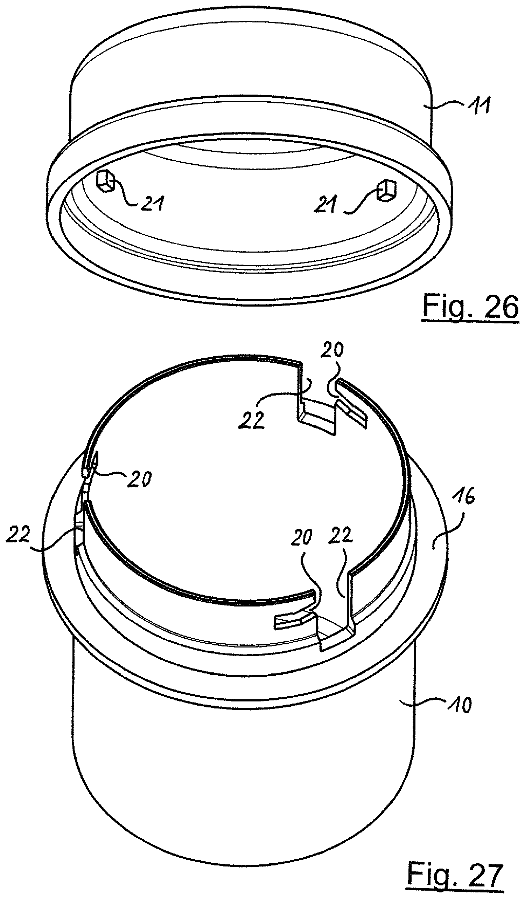

Figur 26 zeigt den Gehäusedeckel 11 der Vorrichtung 1 aus Figur 22 in Ansicht schräg von unten, so dass der Blick in das Innere des Gehäusedeckels 11 fällt, wo auf dessen Innenumfang als zweite Verbindungsmittel 21 der Verbindung 2 zwischen dem Gehäuse 10 und dem Gehäusedeckel 11 zwei Elemente der Bajonettverbindungselemente sichtbar sind.

Figur 27 zeigt das Gehäuse 10 der Vorrichtung 1 aus Figur 22 in Ansicht schräg von oben, wobei hier kein Abscheideelement 3 eingebaut ist. Im oberen, den Überlappungsbereich zum Gehäusedeckel 11 bildenden Randbereich des Gehäuses 10 oberhalb des radial außen liegenden Dichtkragens 16 sind die ersten Verbindungsmittel 20 als Bajonettverbindungselemente erkennbar, die im Wesentlichen in Umfangsrichtung verlaufen. Quer zu den ersten Verbindungsmitteln 20 und diese teilweise schneidend verlaufen die Verbindungsmittelunterbrechungen 22 zur Aufnahme der einen Teil des hier nicht eingebauten Abscheideelementes 3 bildenden Positionierarme 4 in Axialrichtung.

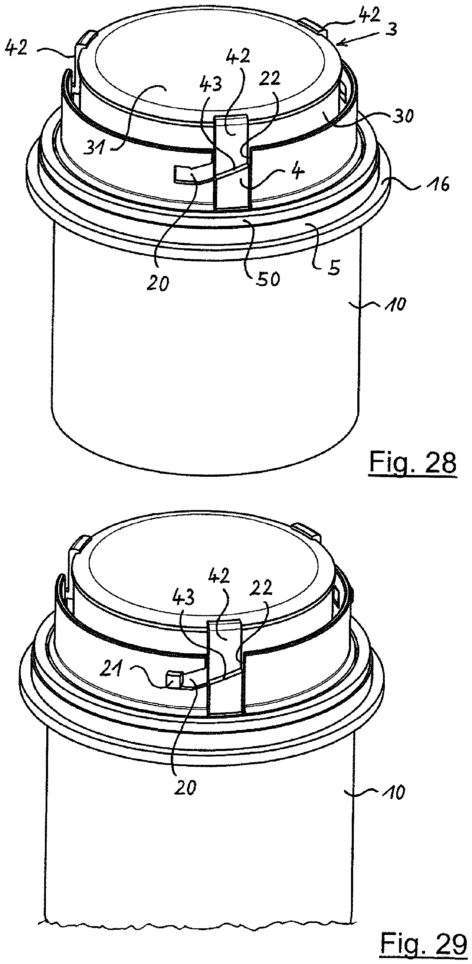

Die Figuren 28 und 29 zeigen eine Abwandlung der Vorrichtung 1 aus den Figuren 22 bis 27, mit eingebautem Abscheideelement 3, aber ohne den Gehäusedeckel 11, in Ansicht.

Die in Axialrichtung verlaufenden Verbindungsmittelunterbrechungen 22 schneiden hier die im Wesentlichen in Umfangsrichtung verlaufenden ersten Verbindungsmittel 20, die hier wieder als Bajonettverbindungselemente ausgeführt sind, wie Figur 28 zeigt. Die Positionierarme 4 sind hier wieder mit jeweils einem Haltearm 42 einstückig ausgeführt, der in Axialrichtung jeweils zum radial äußeren Rand der oberen Stirnscheibe 31 verläuft. Auf der nach außen weisenden Seite der Halterarme 42 ist jeweils eine schräg verlaufende Rampe 43 angeformt, die bei eingebautem Abscheideelement 3 eine mit den ersten Verbindungsmitteln 20 am Gehäuse 10 stetige Kontur bildet.

Über diese durch die Rampe 43 und die ersten Verbindungsmittel 20 gebildete stetige Kontur kann beim Anbringen des Gehäusedeckels 11 und dessen Verdrehen relativ zum Gehäuse 10 jeweils das im Gehäusedeckel 11 angeordnete zweite Verbindungsmittel 21 in seine der Schließstellung des Gehäusedeckels 11 entsprechende Position geführt werden, wie dies in der Figur 29 mit dem darin eingezeichneten zweiten Verbindungsmittel 21 veranschaulicht ist.

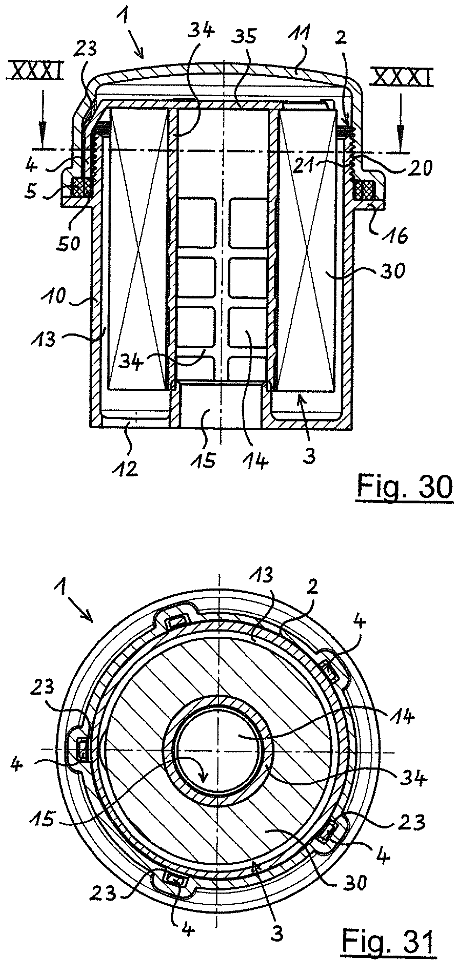

Figur 30 zeigt eine elfte Vorrichtung 1, wieder im Längsschnitt. Diese Vorrichtung 1 besitzt ein becherförmiges Gehäuse 10, das oberseitig mit einem Gehäusedeckel 11 verschlossen ist. Das Gehäuse 10 und der Gehäusedeckel 11 sind dabei mittels einer Verbindung 2, bestehend aus ersten Verbindungsmitteln 20 am Gehäuse 10 und zweiten Verbindungsmitteln 21 am Gehäusedeckel 11, lösbar miteinander verbunden. Konkret ist auch hier die Verbindung 2 eine Schraubverbindung. Zur Abdichtung zwischen Gehäuse 10 und Gehäusedeckel 11 in deren miteinander verbundenem Zustand ist zwischen diesen eine umlaufende Dichtung 5 angeordnet, die axial dichtend zwischen einem unteren Rand des Gehäusedeckels 11 und einem Dichtkragen 16 des Gehäuses 10 liegt. Die Dichtung 5 ist in diesem Ausführungsbeispiel ein separater Dichtring.

Im Gehäuse 10 ist ein Abscheideelement 3 auswechselbar angeordnet, welches aus einem hohlzylindrischen Abscheidematerialkörper 30, hier ohne Stirnscheiben, besteht. Radial außen vom Mediumauslass 15 ist im Boden des Gehäuses 10 ein Mediumeinlass 12 vorgesehen, der in einen Rohmediumbereich 13 radial außerhalb des Abscheideelementes 3 mündet. Radial innen vom Abscheidematerialkörper 30 befindet sich ein Reinmediumbereich 14.

Im Inneren des Abscheidematerialkörpers 30 ist ein Stützkörper 34 angeordnet, der den Abscheidematerialkörper 30 im Betrieb bei der Durchströmung radial von außen nach innen gegen ein Kollabieren schützt. An seinem oberen Stirnende ist der Stützkörper 34 durch eine Stirnwand 35 verschlossen, die hier mit dem übrigen Stützkörper 34 einstückig ist. Mit dem unteren Ende des Stützkörpers 34 ist der Abscheidematerialkörper 30 auf einen rohrstutzenförmigen Mediumauslass 15 aufgesteckt, der zentral unten im Gehäuse 10 angeordnet ist.

Mit dem oberen Ende des Stützkörpers 34 sind hier mehrere Positionierarme 4 einstückig ausgebildet, von denen hier links in Figur 30 einer sichtbar ist. Der Positionierarm 4 geht vom axial oberen Rand des Stützkörpers 34 aus und verläuft zunächst radial nach außen und dann radial außen vom Abscheidematerialkörper 30 axial nach unten.

Jeder Positionierarm 4 läuft durch eine Verbindungsmittelunterbrechung 23 in den zweiten Verbindungsmitteln 21 am Gehäusedeckel 11. Ein äußeres Ende der Positionierarme 4 liegt hier unmittelbar oberhalb der Dichtung 5 in der Verbindungsmittelunterbrechung 23. Mittels der Positionierarme 4 ist das Abscheideelement 3 innerhalb der Vorrichtung 1 zentriert sowie in Umfangsrichtung verdrehfest fixiert.

An ihrem freien Ende gehen die Positionierarme 4 einstückig in einen ringförmig umlaufenden Dichtungsträger 50 über, der auf seinem Außenumfang die Dichtung 5 trägt.

Figur 31 zeigt die Vorrichtung 1 aus Figur 30 im Querschnitt gemäß der Schnittlinie XXXI - XXXI in Figur 30. Radial außen ist der Gehäusedeckel 11 geschnitten. Radial innen davon verläuft die Umfangswand des Gehäuses 10. Zwischen Gehäuse 10 und Gehäusedeckel 11 liegt die Schraubverbindung 2. An hier fünf über den Umfang der Vorrichtung 1 gleichmäßig verteilten Stellen liegt jeweils eine der Verbindungsmittelunterbrechungen 23, durch welche jeweils einer der Positionierarme 4 verläuft.

Die Anordnung der Verbindungsmittelunterbrechungen 23 und der damit zusammenwirkenden Positionierarme 4 ist auch bei dieser Ausführung der Vorrichtung 1 in weiten Grenzen variierbar und kann vorteilhaft zur Bildung einer Schlüssel-Schloss-Codierung genutzt werden, um den Einbau nur bestimmter, geeigneter Abscheideelemente 3 in die Vorrichtung 1 zu erlauben.

Radial innen von der Umfangswand des Gehäuses 10 liegt der Rohmediumbereich 13, auf den radial weiter nach innen der Abscheidematerialkörper 30 des Abscheideelementes 3 folgt. Im Zentrum der Figur 31 liegen im Inneren des Abscheideelementes 3 der Reinmediumbereich 14 und im Hintergrund der Mediumauslass 15. Die Figur 31 zeigt, dass auch hier das Abscheideelement 3 verdrehfest in der Vorrichtung 1 aufgenommen ist und in dieser zentriert wird, auch wenn das Abscheideelement 3 keine Stirnscheiben aufweist.

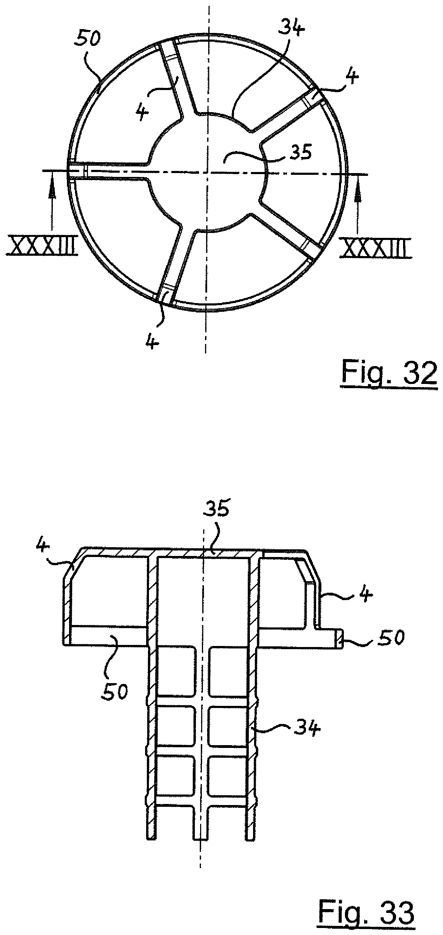

Figur 32 zeigt den Stützkörper 34 der Vorrichtung 1 aus Figur 30 in Draufsicht. Vom dem Betrachter zugewandten, durch die Stirnwand 35 verschlossenen Stirnende des Stützkörpers 34 gehen die fünf Positionierarme 4 in Radialrichtung nach außen hin aus und biegen dann nach unten hin ab. An ihrem freien Ende gehen die Positionierarme 4 in den ringförmigen, umlaufenden Dichtungsträger 50 über.

Figur 33 zeigt den Stützkörper aus Figur 32 im Längsschnitt. Mit seinem zentralen gitterförmigen Teil liegt der Stützkörper 34 in Einbauzustand am Innenumfang des Abscheidematerialkörpers 30 des Abscheideelementes 3 an. Vom oberen, durch die Stirnwand 35 verschlossenen Stirnende des Stützkörpers 34 gehen die Positionierarme 4 in Radialrichtung nach außen hin aus und biegen dann nach unten hin ab. An ihrem freien, unteren Ende gehen die Positionierarme 4 einstückig in den ringförmigen, umlaufenden Dichtungsträger 50 über.

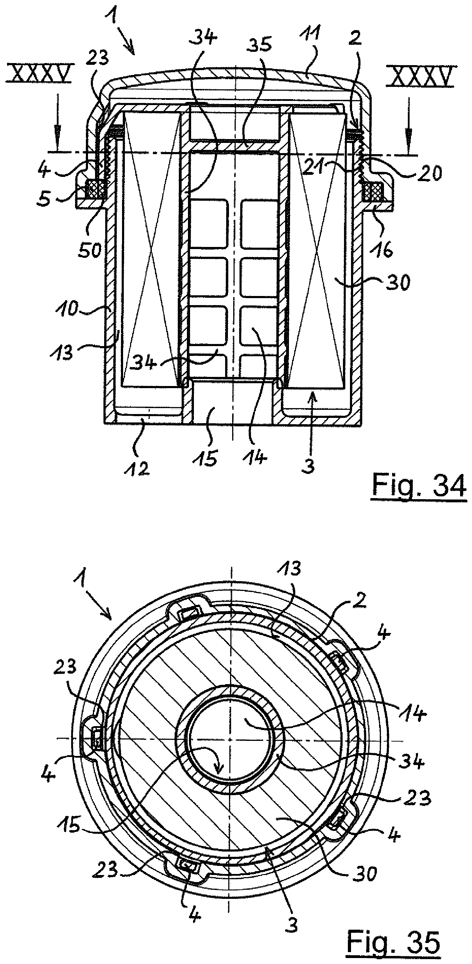

Figur 34 zeigt eine zwölfte Vorrichtung 1, im Längsschnitt, die eine Abwandlung der Vorrichtung 1 gemäß Figur 30 ist. Unterschiedlich ist, dass bei der Ausführung nach Figur 34 die den Stützkörper 34 verschließende Stirnwand 35 versenkt im oberen, rohrförmigen Teil des Stützkörpers 34 angeordnet ist.

Figur 35 zeigt die Vorrichtung 1 aus Figur 34 im Querschnitt gemäß der Schnittlinie XXXV - XXXV in Figur 34. Hinsichtlich der in Figur 35 sichtbaren Teile wird auf die Beschreibung der insoweit übereinstimmenden Figur 31 verwiesen.

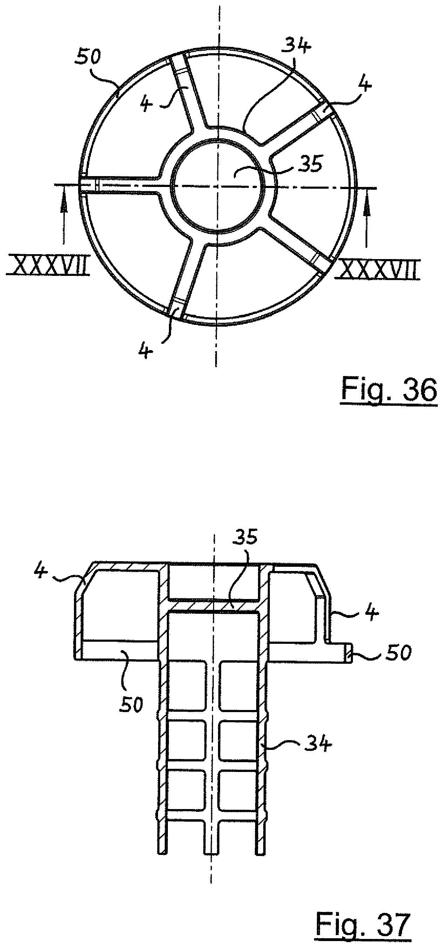

Figur 36 zeigt den Stützkörper 34 der Vorrichtung 1 aus Figur 34, in Draufsicht, wobei die Stirnwand 35 versenkt im Stützkörper 34 liegt.

Figur 37 zeigt den Stützkörper 34 aus Figur 36 im Längsschnitt. Auch hier ist deutlich sichtbar, dass die Stirnwand 35 versenkt im rohrförmigen oberen Teil des Stützkörpers 34 liegt.

Ansonsten entspricht das Beispiel nach den Figuren 34 bis 37 dem Beispiel nach den Figuren 30 bis 33, auf deren Beschreibung verwiesen wird.

### Bezugszeichenliste:

| Zeichen | Bezeichnung |
|---|---|
| 1 | Vorrichtung |
| 10 | Gehäuse |
| 11 | Gehäusedeckel |
| 12 | Mediumeinlass |
| 13 | Rohmediumbereich |
| 14 | Reinmediumbereich |
| 15 | Mediumauslass |
| 16 | Dichtkragen an 10 |
| 2 | Verbindung zwischen 10 und 11 |
| 20 | erste Verbindungsmittel an 10 |
| 21 | zweite Verbindungsmittel an 11 |
| 22 | Verbindungsmittelunterbrechung in 20 |
| 23 | Verbindungsmittelunterbrechung in 21 |
| 24 | Rastelement in 23 |
| 3 | Abscheideelement |
| 30 | Abscheidematerialkörper |
| 30', 30" | Teil-Abscheidematerialkörper |
| 31 | deckelseitige (obere) Stirnscheibe |
| 32 | deckelferne (untere) Stirnscheibe |
| 33 | Zwischenscheibe |
| 34 | Stützkörper in 3 |
| 35 | Stirnwand |
| 4 | Positionierarm(e) |
| 40 | freies Ende von 4 |
| 41 | Tragring |
| 42 | Haltearme zwischen 31 und 41 |
| 43 | Rampe |
| 44 | Rastelement an 4 |
| 5 | Dichtung |
| 50 | Dichtungsträger |

## Patentansprüche

1. Vorrichtung (1) zum Reinigen von flüssigen oder gasförmigen Medien, mit einem becher- oder topfförmigen Gehäuse (10), mit einem in der Vorrichtung (1) angeordneten auswechselbaren Abscheideelement (3), welches in der Vorrichtung (1) einen Rohmediumbereich (13) und einen Reinmediumbereich (14) voneinander trennt, mit einem in den Rohmediumbereich (13) mündenden Mediumeinlass (12) für zu reinigendes Medium, mit einem vom Reinmediumbereich (14) abgehenden Mediumauslass (15) für gereinigtes Medium, und mit einem mit dem Gehäuse (10) mittels einer Verbindung (2) lösbar verbundenen Gehäusedeckel (11), wobei in einem axialen Überlappungsbereich von Gehäuse (10) und Gehäusedeckel (11) das Gehäuse (10) erste umlaufende Verbindungsmittel (20) und der Gehäusedeckel (11) dazu passende zweite umlaufende Verbindungsmittel (21) aufweist, die durch Verdrehen relativ zueinander in Umfangsrichtung in und außer Eingriff bringbar sind, und wobei zwischen dem Gehäuse (10) und dem Gehäusedeckel (11) eine diese bei mit dem Gehäuse (10) verbundenem Gehäusedeckel (11) gegeneinander abdichtende Dichtung (5) angeordnet ist,
**dadurch gekennzeichnet,**
**dass** die ersten Verbindungsmittel (20) oder die zweiten Verbindungsmittel (21) wenigstens eine in Verbindungsmittelaxialrichtung verlaufende, die ersten Verbindungsmittel (20) oder die zweiten Verbindungsmittel (21) schneidende Verbindungsmittelunterbrechung (22, 23) aufweisen,
**dass** das Abscheideelement (3) wenigstens einen Positionierarm (4) aufweist, der radial außen vom Abscheideelement (3) verläuft und der so am Abscheideelement (3) angeordnet ist, dass er in einem in die Vorrichtung (1) eingebauten Zustand des Abscheideelementes (3) passend in der Höhe des axialen Überlappungsbereichs von Gehäuse (10) und Gehäusedeckel (11) zu liegen kommt,
**dass** der Positionierarm (4) im Einbauzustand des Abscheideelementes (3) und bei mit dem Gehäuse (10) verbundenem Gehäusedeckel (11) in einer der wenigstens einen Verbindungsmittelunterbrechung (22, 23) entsprechenden Lage und Ausrichtung verlaufend zumindest teilweise in der Verbindungsmittelunterbrechung (22, 23) aufgenommen ist und
**dass** die Dichtung (5) oder ein die Dichtung (5) tragender Dichtungsträger (50) mit dem wenigstens einen Positionierarm (4) verbunden oder einstückig ausgebildet ist.

2. Vorrichtung nach Anspruch 1, **dadurch gekennzeichnet, dass** über den Umfang der ersten Verbindungsmittel (20) oder der zweiten Verbindungsmittel (21) verteilt mehrere Verbindungsmittelunterbrechungen (22, 23) vorgesehen sind und dass das Abscheideelement (3) mehrere entsprechend den Verbindungsmittelunterbrechungen (22, 23) passend angeordnete Positionierarme (4) aufweist.

3. Vorrichtung nach Anspruch 2, **dadurch gekennzeichnet, dass** die Verbindungsmittelunterbrechungen (22, 23) der ersten Verbindungsmittel (20) oder der zweiten Verbindungsmittel (21) und die Positionierarme (4) miteinander eine Schlüssel-Schloss-Codierung bilden.

4. Vorrichtung nach Anspruch 3, **dadurch gekennzeichnet, dass** die Verbindungsmittelunterbrechungen (22, 23) der ersten Verbindungsmittel (20) oder der zweiten Verbindungsmittel (21) und die Positionierarme (4) in Umfangsrichtung unregelmäßig verteilt sind und/oder dass die Verbindungsmittelunterbrechungen (22, 23) der ersten Verbindungsmittel (20) oder der zweiten Verbindungsmittel (21) untereinander in Umfangsrichtung unterschiedlich breit sind und die Positionierarme (4) eine dazu passende in Umfangsrichtung unterschiedliche Breite aufweisen.

5. Vorrichtung nach einem der Ansprüche 1 bis 4, **dadurch gekennzeichnet, dass** der/jeder Positionierarm (4) in der zugehörigen Verbindungsmittelunterbrechung (22, 23) mittels zusammenwirkender Rastelemente (24, 44) lösbar verrastbar ist.

6. Vorrichtung nach einem der Ansprüche 1 bis 5, **dadurch gekennzeichnet, dass** das Abscheideelement (3) eine hohlzylindrische Grundform mit einem Abscheidematerialkörper (30) und zwei diesen stirnseitig abdeckenden Stirnscheiben (31, 32) hat und dass der/jeder Positionierarm (4) mit einer der Stirnscheiben (31, 32) des Abscheideelementes (3) verbunden oder einstückig ist oder dass der/jeder Positionierarm (4) mit dem Abscheidematerialkörper (30) des Abscheideelementes (3) in Umfangs- und Axialrichtung positionsfest verbunden ist.

7. Vorrichtung nach einem der Ansprüche 1 bis 5, **dadurch gekennzeichnet, dass** das Abscheideelement (3) einen Abscheidematerialkörper (30) mit einer hohlzylindrische Grundform und mit einem darin angeordneten Stützkörper (34) aufweist und dass der/jeder Positionierarm (4) mit dem Stützkörper (34) des Abscheideelementes (3) verbunden oder einstückig ist.

8. Vorrichtung nach einem der Ansprüche 1 bis 5, **dadurch gekennzeichnet, dass** das Abscheideelement (3) einen aus zwei jeweils eine hohlzylindrische Grundform aufweisenden Teil-Abscheidematerialkörpern (30', 30") gebildeten Abscheidematerialkörper (30) aufweist, dass zwei einander zugewandten Stirnseiten der beiden Teil-Abscheidematerialkörper (30', 30") mittels einer Zwischenscheibe (33) miteinander verbunden sind und dass der/jeder Positionierarm (4) mit der Zwischenscheibe (33) des Abscheideelementes (3) verbunden oder einstückig ist.

9. Vorrichtung nach einem der Ansprüche 1 bis 8, **dadurch gekennzeichnet, dass** die Dichtung (5) als Dichtring radial außen auf dem Dichtungsträger (50) oder axial stirnseitig an dem Dichtungsträger (50) angeordnet ist.

10. Vorrichtung nach Anspruch 9, **dadurch gekennzeichnet, dass** die Dichtung (5) an den Dichtungsträger (50) angespritzt oder als separat hergestelltes Bauteil auf den Dichtungsträger (50) aufgesetzt ist.

11. Vorrichtung nach einem der Ansprüche 1 bis 8, **dadurch gekennzeichnet, dass** der/jeder Positionierarm (4), der Dichtungsträger (50) und die Dichtung (5) einstückig miteinander aus einem thermoplastischen Elastomer gebildet sind.

12. Vorrichtung nach einem der Ansprüche 1 bis 11, **dadurch gekennzeichnet, dass** die Verbindung (2) zwischen Gehäuse (10) und Gehäusedeckel (11) mit den ersten Verbindungsmitteln (20) und den zweiten Verbindungsmitteln (21) durch in dem axialen Überlappungsbereich von Gehäuse (10) und Gehäusedeckel (11) angeordnete zusammenwirkende Schraubgewinde oder zusammenwirkende Bajonettverbindungselemente gebildet ist.

13. Vorrichtung nach einem der Ansprüche 1 bis 12, **dadurch gekennzeichnet, dass** sie ein Ölfilter oder ein Kraftstofffilter oder ein Ölnebelabscheider einer Brennkraftmaschine eines Kraftfahrzeuges ist.

## Claims

1. A device (1) for cleaning liquid or gaseous media, comprising a cup-shaped or pot-shaped housing (10), a replaceable separating device (3) arranged in the device (1) to separate a raw medium area (13) from a pure medium area (14) in the device (1), a medium inlet (12) opening into the raw medium area (13) for the medium to be purified, a medium outlet (15) for purified medium leaving the pure medium area (14), and a housing lid (11) releasably connected to the housing (10) by connection means (2), wherein the housing (10) has first circumferential connection means (20) and the housing lid (11) has corresponding second circumferential connection means (21) in an axial overlap area of the housing (10) and the housing lid (11), the connection means being capable of engaging and disengaging with one another by circumferential turning relatively to one another, and wherein a seal (5) is situated between the housing (10) and the housing lid (11) to seal them against each other when the housing lid (11) is connected to the housing (10),
**characterized in**
**that** the first connection means (20) or the second connection means (21) has at least one gap (22, 23) extending in the axial direction of the connection means and intersecting the first connection means (20) or the second connection means (21),
**that** the separating device (3) has at least one positioning arm (4) extending radially outside of the separating device (3) and arranged on the separating device (3) so as to come to rest on a level with the axial overlap area of the housing (10) and the housing lid (11) when the separating device (3) is installed in the device (1),
**that** with the separating device (3) installed and with the housing (10) connected to the housing lid (11), the positioning arm (4) is positioned and aligned with the one or more gaps (22, 23) in the connection means and is at least partly accommodated in the gap (22, 23) in the connection means, and that the seal (5) or a seal carrier (50) supporting the seal (5) is attached to the one or more positioning arms (4) or forms an integral part thereof.

2. The device according to Claim 1, **characterized in that** several gaps (22, 23) provided in the connection means are distributed circumferentially around the first connection means (20) or the second connection means (21), and that the separating device (3) has a plurality of positioning arms (4) suitably arranged to correspond to the gaps (22, 23) in the connection means (20, 21).

3. The device according to Claim 2, **characterized in that** the gaps (22, 23) in the first connection means (20) or in the second connection means (21) and the positioning arms (4) together form a lock-and-key coding.

4. The device according to Claim 3, **characterized in that** the gaps (22, 23) in the first connection means (20) or in the second connection means (21) and the positioning arms (4) are unevenly distributed circumferentially and/or the gaps (22, 23) in the first connection means (20) or in the second connection means (21) differ in width in the circumferential direction and the positioning arms (4) have correspondingly different widths in the circumferential direction.

5. The device according to one of Claims 1 to 4, **characterized in that** the/each positioning arm (4) is provided to be releasably latched by cooperating latching elements (24, 44) in the pertinent gap (22, 23) in the connection means (20, 21).

6. The device according to one of Claims 1 to 5, **characterized in that** the separating device (3) is basically hollow cylindrical in shape, with a separating-material body (30) covered at its ends by two end face discs (31, 32), and that the/each positioning arm (4) is attached to or integral with one of the end face discs (31, 32) of the separating device (3), or that the/each positioning arm (4) is connected to the separating-material body (30) of the separating device (3) in a fixed position in the circumferential and axial directions.

7. The device according to one of Claims 1 to 5, **characterized in that** the separating device (3) comprises a separating-material body (30) with a basically hollow-cylindrical shape, with a supporting body (34) arranged therein, and that the/each positioning arm (4) is attached to or integral with the supporting body (34) of the separating device (3).

8. The device according to one of Claims 1 to 5, **characterized in that** the separating device (3) comprises a separating-material body (30) made up of two partial separating-material bodies (30', 30"), each having a basically hollow-cylindrical shape, that two end faces of the two partial separating-material bodies (30', 30") facing one another are connected together by an intermediate disc (33), and that the/each positioning arm (4) is attached to or integral with the intermediate disc (33) of the separating device (3).

9. The device according to one of Claims 1 to 8, **characterized in that** the seal (5) is arranged as an annular seal on the seal carrier (50) either radially outside or axially on the end face of the seal carrier (50).

10. The device according to Claim 9, **characterized in that** the seal (5) is either injection-molded onto the seal carrier (50) or is placed on the seal carrier (50) as a separately manufactured component.

11. The device according to one of Claims 1 to 8, **characterized in that** the/each positioning arm (4), the seal carrier (50), and the seal (5) are integrally formed from a thermoplastic elastomer.

12. The device according to one of Claims 1 to 11, **characterized in that** the connection (2) between the housing (10) and housing lid (11) with the first connection means (20) and the second connection means (21) is made by cooperating screw threads or bayonet connecting elements situated in the axial overlap area of the housing (10) and the housing lid (11).

13. The device according to one of Claims 1 to 12, **characterized in that** the device is an oil filter or a fuel filter or an oil mist separator in an internal combustion engine of a motor vehicle.

## Revendications

1. Dispositif (1) de purification d'un milieu liquide ou gazeux, doté d'un boîtier (10) en forme de gobelet ou de pot, doté d'un dispositif de séparation (3) interchangeable, agencé dans le dispositif (1), qui sépare l'une de l'autre une zone de milieu brut (13) d'une zone de milieu pur (14) dans le dispositif (1), doté d'une admission de milieu (12) pour milieu à purifier débouchant dans la zone de milieu brut (13), doté d'une évacuation de milieu (15) pour milieu purifié, partant de la zone de milieu pur (14), et doté d'un couvercle de boîtier (11) relié au boîtier (10) de manière détachable par un raccordement (2), le boîtier (10) présentant, dans une première zone de chevauchement axiale des boîtier (10) et couvercle de boîtier (11), des premiers moyens de raccordement (20) périphériques, et le couvercle de boîtier (11) présentant des deuxièmes moyens de raccordement (21) périphériques y correspondants qui peuvent venir en prise ou s'en défaire par rotation l'un par rapport à l'autre dans le sens de la périphérie, et un joint d'étanchéité (5) étant agencé entre le boîtier (10) et le couvercle de boîtier (11), lequel les calfeutre l'un par rapport à l'autre lorsque le couvercle de boîtier (11) est relié au boîtier (10),
**caractérisé en ce**
**que** les premiers moyens de raccordement (20) ou les deuxièmes moyens de raccordement (21) présentent au moins une interruption de moyen de raccordement (22, 23) se trouvant dans le sens axial des moyens de raccordement et coupant les premiers moyens de raccordement (20) ou les deuxièmes moyens de raccordement (21),
**que** le dispositif de séparation (3) présente au moins un bras de positionnement (4) qui se trouve radialement du côté extérieur du dispositif séparateur (3) et qui est agencé sur le dispositif de séparation (3) de sorte à venir se poser, lorsque le dispositif de séparation (3) est intégré dans le dispositif (1), de manière adéquate à la hauteur de la zone de chevauchement axiale des boîtier (10) et couvercle de boîtier (11),
**que** le bras de positionnement (4), lorsque le dispositif de séparation (3) est intégré et lorsque le couvercle de boîtier (11) est relié au boîtier (10), est monté au moins partiellement dans l'interruption de moyen de raccordement (22, 23), dans une position et une direction correspondant au moins à une interruption de moyens de raccordement (22, 23), et
**que** le joint d'étanchéité (5) ou un support de joint d'étanchéité (50) portant le joint d'étanchéité (5) est relié à l'au moins un bras de positionnement (4) ou est réalisé mono-pièce.

2. Dispositif selon la revendication 1, **caractérisé en ce que** plusieurs interruptions de moyens de raccordement (22, 23) sont prévues, réparties sur toute la périphérie des premiers moyens de raccordement (20) ou des deuxièmes moyens de raccordement (21), et que le dispositif de séparation (3) présente plusieurs bras de positionnement (4) agencés de manière adéquate et correspondante aux interruptions de moyens de raccordement (22, 23).

3. Dispositif selon la revendication 2, **caractérisé en ce que** les interruptions de moyens de raccordement (22, 23) des premiers moyens de raccordement (20) ou des deuxièmes moyens de raccordement (21), et les bras de positionnement (4) forment ensemble un codage de verrouillage à clé.

4. Dispositif selon la revendication 3, **caractérisé en ce que** les interruptions de moyen de raccordement (22, 23) des premiers moyens de raccordement (20) ou des deuxièmes moyens de raccordement (21) et les bras de positionnement (4) sont répartis de manière irrégulière dans le sens de la périphérie et/ou que les interruptions de moyens de raccordement (22, 23) des premiers moyens de raccordement (20) ou des deuxièmes moyens de raccordement (21) sont de largeurs différentes entre eux dans le sens de la périphérie et que les bras de positionnement (4) présentent une largeur correspondante différente dans le sens de la périphérie.

5. Dispositif selon l'une quelconque des revendications 1 à 4, **caractérisé en ce que** le/chaque bras de positionnement (4) peut être encliqueté de façon non définitive dans l'interruption de moyen de raccordement (22, 23) correspondante au moyen d'éléments d'encliquetage (24, 44) coopérants.

6. Dispositif selon l'une quelconque des revendications 1 à 5, **caractérisé en ce que** le dispositif de séparation (3) a une forme de base cylindrique creuse dotée d'un corps de matériau séparateur (30) et de deux parois frontales (31, 32) couvrant celui-ci à l'avant, et que le/chaque bras de positionnement (4) est relié à l'une des parois frontales (31, 32) du dispositif de séparation (3) ou est mono-pièce, ou que le/chaque bras de positionnement (4) est relié, de manière fixe en position, au corps de matériau séparateur (30) du dispositif de séparation (3) dans le sens périphérique et axial.

7. Dispositif selon l'une quelconque des revendications 1 à 5, **caractérisé en ce que** le dispositif de séparation (3) présente un corps de matériau séparateur (30) doté d'une forme de base cylindrique creuse et d'un corps de support (34) agencé dedans, et que le/chaque bras de positionnement (4) est relié au corps de support (34) du dispositif de séparation (3) ou est mono-pièce.

8. Dispositif selon l'une quelconque des revendications 1 à 5, **caractérisé en ce que** le dispositif de séparation (3) présente un corps de matériau séparateur (30) composé de deux corps de matériau séparateur partiels (30', 30") présentant chacun une forme de base cylindrique creuse, que deux parois frontales des deux corps de matériau séparateur partiels (30', 30"), tournées l'une vers l'autre, sont reliées l'une à l'autre par une paroi intermédiaire (33) et que le/chaque bras de positionnement (4) est relié à la paroi intermédiaire (33) du dispositif de séparation (3) ou est mono-pièce.

9. Dispositif selon l'une quelconque des revendications 1 à 8, **caractérisé en ce que** le joint d'étanchéité (5) est agencé de manière radiale à l'extérieur sur le support de joint d'étanchéité (50) en tant que bague d'étanchéité, ou de manière axiale à l'avant, sur le support de joint d'étanchéité (50).

10. Dispositif selon la revendication 9, **caractérisé en ce que** le joint d'étanchéité (5) est moulé par injection sur le support de joint d'étanchéité (50) ou est ajouté sur le support d'étanchéité (50) en tant que pièce construite séparément.

11. Dispositif selon l'une quelconque des revendications 1 à 8, **caractérisé en ce que** le/chaque bras de positionnement (4), le support de joint d'étanchéité (50) et le joint d'étanchéité (5) sont formés ensemble d'un seul tenant à partir d'un élastomère thermoplastique.

12. Dispositif selon l'une quelconque des revendications 1 à 11, **caractérisé en ce que** le raccordement (2) entre boîtier (10) et couvercle de boîtier (11) est formé avec les premiers moyens de raccordement (20) et les deuxièmes moyens de raccordement (21) par des filets de vis coopérants agencés dans la zone de chevauchement axiale des boîtier (10) et couvercle de boîtier (11) ou par des éléments de raccordement à baïonnette coopérants.

13. Dispositif selon l'une quelconque des revendications 1 à 12, **caractérisé en ce qu'**il est un filtre à huile ou un filtre à carburant ou un séparateur de bruine d'huile d'un moteur à combustion interne d'un véhicule automobile.
